(19) **Europäisches Patentamt**

**European Patent Office**

**Office européen des brevets**

(11) **EP 1 048 006 B1**

(12) **EUROPEAN PATENT SPECIFICATION**

(45) Date of publication and mention
of the grant of the patent:
**16.06.2004 Bulletin 2004/25**

(51) Int Cl.⁷: **G06K 19/06**

(86) International application number:
**PCT/GB1999/000081**

(21) Application number: **99900575.4**

(22) Date of filing: **12.01.1999**

(87) International publication number:
**WO 1999/035610 (15.07.1999 Gazette 1999/28)**

(54) **MAGNETIC DATA TAGGING**

MAGNETISCHE DATENMARKIERUNG

ETIQUETAGE MAGNETIQUE COMPRENANT DES DONNEES

(84) Designated Contracting States:
**BE CH DE ES FR GB IT LI NL SE**

(30) Priority: **12.01.1998 GB 9800479**
**29.01.1998 GB 9801842**
**31.07.1998 GB 9816642**
**22.12.1998 GB 9828238**

(43) Date of publication of application:
**02.11.2000 Bulletin 2000/44**

(60) Divisional application:
**04009207.4**

(73) Proprietor: **BTG INTERNATIONAL LIMITED**
**London EC4M 7SB (GB)**

(72) Inventors:
• **DAMES, Andrew, Nicholas**
**Cambridge CB4 1HU (GB)**
• **ENGLAND, James Mark Carson**
**Milton, Cambridge CB4 6DG (GB)**

(74) Representative: **Bingham, Ian Mark et al**
**British Technology Group Ltd.,**
**10 Fleet Place**
**London EC4M 7SB (GB)**

(56) References cited:
**EP-A- 0 295 085      EP-A- 0 812 752**
**EP-B- 0 330 656      EP-B- 0 623 237**
**WO-A-96/08087        US-A- 5 005 001**
**US-A- 5 083 112       US-A- 5 554 974**

## Description

## Field of the Invention

This invention relates to magnetic data tag readers and to a method of interrogating a magnetic data tag.

## Background

Various forms of goods identification or tagging are well known. These include optical bar codes, RFID (radio frequency identification), EAS (electronic article security), magnetic data recording and magnetic sensors.

Optical bar codes are widely used and have the advantage of being low cost and easy to manufacture through the use of standard printing techniques. However, a bar code reader system requires a direct optical path between the reader and the bar code on an item tag.

RFID is a relatively expensive technique, although widely used commercially for many applications including animal tagging and airport baggage labelling. The technology is based on a silicon chip attached to an inductive (a.c. magnetic) antenna. The silicon chip incorporates a simple receiver and transmitter as well as a processor and data storage. An RFID tag is interrogated by an external a.c. magnetic field, which may be additionally used to power the device. There are many manufacturers of RFID devices and systems, including GEM Plus, Texas Instruments and Philips.

EAS (Electronic Article Security) relates to the application of a tag or label that is attached to retail items for security purposes. The presence of the tag can be detected by an interrogation system and triggers an alarm when detected. The interrogation system is generally placed near the exits of shops and stores to prevent and deter shoplifting. Most EAS systems utilise a. c. magnetic fields (induction) and the tags incorporate specialised magnetic materials that provide a device that is either active or de-activated.

The concept behind magnetic EAS systems is a method of detecting a magnetic marker. There are three main forms of magnetic material used in EAS systems: ribbons of spin melt materials, thin film materials and amorphous wires. There are three main physical properties used to detect the magnetic element. The first uses the magnetostrictive property of a material (length changes with the level of applied magnetic field). An interrogation a.c. magnetic interrogation field is used to excite the magnetic element at its natural mechanically resonant frequency. The element is detected by the magnetic field it emits as it mechanically resonates. This can be described as an acousto-magnetic detection means. For example, US-A-5,420,569 describes a mechanically resonant magnetic data tag.

The second effect used is the non-linear B-H loop characteristic of the magnetic material. A spatially uniform d.c. (bias) magnetic field is applied to the interrogation zone. This is (slowly) varied with time. An a.c. magnetic field, typically at a few kHz, is simultaneously applied. When the tag is biased at the correct level by the d.c. field, it generates harmonics of the applied a.c. field that are detected by a receiver means. Alternatively a single frequency, typically around 200 Hz, is applied to the tag, and high order harmonics detected. These methods may be described as 'harmonic detection' or 'E.M.' method.

The third detection method uses the 'Barkhausen' effect. A d.c. bias field is applied to the magnetic element and this is varied slowly with time. The magnetic material has a property that the net magnetisation (M) in the material changes extremely nonlinearly. A small variation in applied magnetic field (H) causes a large (jump) variation in magnetisation (M). Note that the magnetisation M refers to a magnetic element and the magnetic flux B applies to the material. The large and rapid change in the net magnetisation M of the element can be detected with an external coil, which detects an emf (a 'blip') caused by the rapid rate of flux change in the coil. This method has been called a 'Barkhausen' effect and the 'best' materials have a square B-H loop. The magnetic element effectively changes from positive to negative saturation when generating a 'blip'. For example, US-A-4,660,025 describes an EAS magnetic marker based on a single wire or ribbon of magnetic material which demonstrates the Barkhausen effect.

Further examples of various types of known EAS marker will now be briefly described. US-A-4,960,651 describes an EAS marker using thin film magnetic materials. US-A-5,083,112 describes an EAS magnetic marker comprising a layered lamination of thin film materials. The aim of the layered structure is to produce a marker in which the easy axes of magnetisation of all the layers are aligned, so that all of the thin films reverse as a single entity and therefore produce a sharp, readily distinguishable response. This patent also discloses a bi-directional marker, in which the layers are laminated with the easy axis directions at 90° with respect to one another. This ensures that a response is achieved for all interrogation field directions. US-A-5,605,768 describes an alternative magnetic EAS marker in which data can be stored by an arrangement of parallel wire members on a plane member, the easy axis of which is arranged at a particular angle to that of the wire members to produce a large Barkhausen effect. US-A-5,005,001 describes an EAS system that uses a rotating magnetic field to interrogate a ferromagnetic marker.

By contrast with tags for use in EAS systems, data or identification tags require the ability to distinguish between a number of discrete magnetic elements, the arrangement of which encodes the data. For example, in US-A-5,204,526, the magnetic elements are distinguished by their differing coercivities. As a further example, US-A-5,594,229 describes a magnetic tag comprising a large number of randomly dispersed bistable magnetic elements which produce a particular signature when interrogated with a linear magnetic field gradient, and so can be used to detect counterfeit items. PCT publication WO 96/31790 discloses a magnetic data tag in the form of thin strips or linear arrays of magnetically active regions, interrogated with a linear magnetic field gradient that is swept in a linear spatial direction. PCT publication WO 98/26312 describes magnetic data tags constructed from ribbons of magnetic material arranged as a linear array of parallel elements, or in a 'transecting' arrangement where the ribbons are arranged as the diameters of a circle or sphere. A disadvantage of these types of tag includes their relatively large size and relatively low data densities.

EP 0,623,237 describes a method of remote sensing of objects by marking the objects with labels having resonant circuits and detecting the resonant frequency of the resonant circuits when they are excited.

## Summary of the Invention

According to the present invention there is provided a method as described in claim 1 and an apparatus as described in claim 5.

## Brief Description of the Drawings

Embodiments of the invention will now be described, by way of example, with reference to the accompanying drawings, in which:

Figure 1 illustrates the physical items comprising the invention,
Figure 2 illustrates the major components and assemblies of the invention,
Figure 3 illustrates the arrangement of electrical coils used in the '2-D' embodiment,
Figure 4 shows the arrangement of interrogation coils in the '2-D.' embodiment,
Figure 5 shows one receiver coil set,
Figure 6 illustrates magnetic field patterns produced by the invention,
Figure 7 shows a single magnetic element and its interaction with the interrogation magnetic field,
Figure 8 shows the B-H loop characteristic of the magnetic material comprising a magnetic element,
Figure 9 illustrates the detected signal from one magnetic element,
Figure 10 illustrates a magnetic data tag,
Figure 11 shows output signals from a prototype magnetic data tag,
Figure 12 illustrates the receiver signals detected from a magnetic data tag,
Figure 13 is a schematic of the receiver electronic circuit,

Figure 14 is the output from a calibration tag,
Figure 15 is a schematic of the 'transmit' electronic circuit,
Figure 16 is a diagram of a two-digit magnetic data tag,
Figure 17 is a table of manufacturing tolerances for magnetic element orientation angles,
Figure 18 is a table of absolute orientation angles used in the tags for codes 00-50,
Figure 19 is a table of absolute orientation angles used in the tags for codes 51-99,
Figure 20 shows one method of manufacturing the magnetic data tags in volume,
Figure 21 is a block schematic of the single-sided reader,
Figure 22 represents a single sided antenna assembly,
Figure 23 shows details of the printed circuit receiver coils used in the assembly of Figure 22,
Figure 24 shows the analogue output signal from a seven-layer tag,
Figure 25 is a diagram of a 'conical' scan employed by a reader,
Figure 26 is a flow chart of the single-sided reader processing algorithm,
Figure 27 is a flow chart for the data acquisition portion of the processing algorithm,
Figure 28 is a flow chart for conversion of data to orientation angles,
Figure 29 is a flow chart of the two-digit tag-decoding algorithm,
Figure 30 is a flow chart of the four-digit tag-decoding algorithm,
Figure 31 is a flow chart of the variable-length data-decoding algorithm,
Figure 32 illustrates a programmable tag,
Figure 33 illustrates the magnetic vector fields associated with reading the programmable tag,
Figure 34 illustrates the signals detected from the programmable tag,
Figure 35 is a flow chart for decoding the programmable tag data,
Figure 36 shows a further arrangement of a programmable tag,
Figure 37 shows the arrangement of receiver coils in a 3-D reader embodiment,
Figure 38 illustrates the physical arrangement of the receiver coils,
Figure 39 shows the arrangement of transmit coils in a 3-D reader embodiment,
Figure 40 shows the physical arrangement of the transmit coils,
Figure 41 shows the physical arrangement of all the coils,
Figure 42 is a block schematic of a '3-D' reader system,
Figure 43 shows the interrogation drive waveforms and receive signals,

Figure 44 shows the convolution function used in processing,

Figure 45 is a top level flow chart of the 3-D decode processing algorithm,

Figure 46 is a flow chart for the data acquisition algorithm,

Figure 47 is a flow chart for the field direction algorithm,

Figure 48 is a flow chart for the 'blip' detection algorithm,

Figure 49 is a flow chart for the minimisation algorithm,

Figure 50 is a flow chart for the optimum determination of gap angles,

Figure 51 is an alternative magnetic field generating means for a reader,

Figure 52 is an alternative arrangement of the magnetic data tag.

## Detailed Description

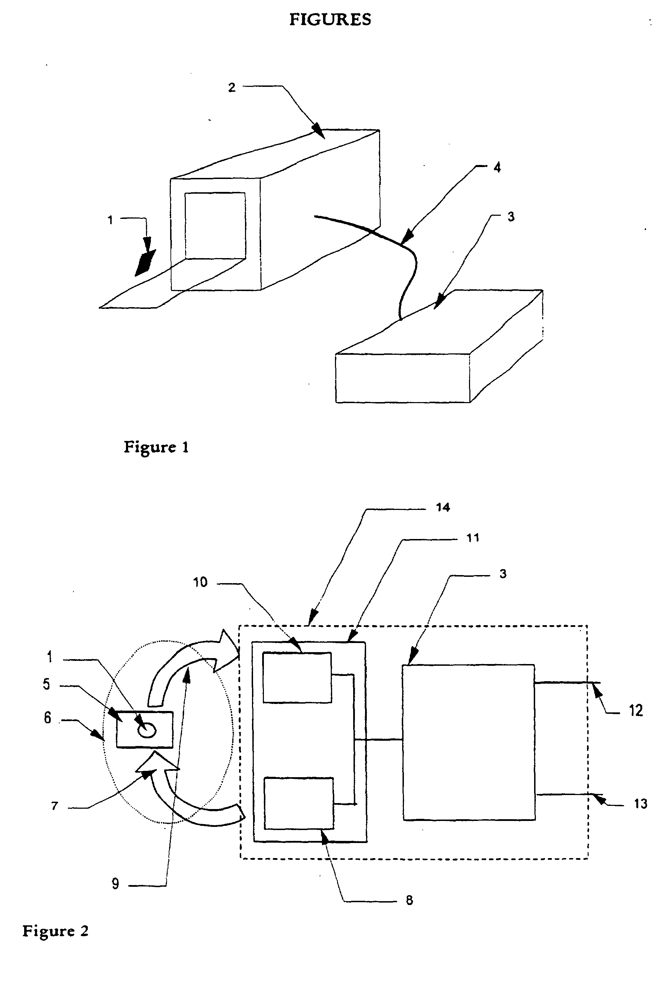

Referring to Figure 1, a magnetic tag reading system comprises a magnetic data tag, 1, an interrogation unit, 2 and processing electronics, 3 connected to the interrogation unit by a cable 4. Figure 2 is used to illustrate the major elements and terminology used by the inventors in the following text. The tag, 1, is attached to an item being labelled or tagged, 5, and is placed within an interrogation volume, 6.
The construction of the tag, 1, is described below. The tag, 1, is interrogated by a magnetic field, 7, generated by a 'transmit' coil set; 8. In response to the interrogation (or transmit) magnetic field, 7, the tag, 1, generates a detectable magnetic field response, 9. The magnetic field response, 9, is detected by 'receive' coils, 10. The transmit coils, 8, and receive coils, 10, form an assembly called the antenna, 11. The interrogation volume, 6, and the antenna, 11 comprise the interrogation unit, 2. The signals produced are processed by electronic processing, 3 and the data stored on the tag is available at output 12. The unit is powered by electrical input 13.

## 2-D Aperture Reader

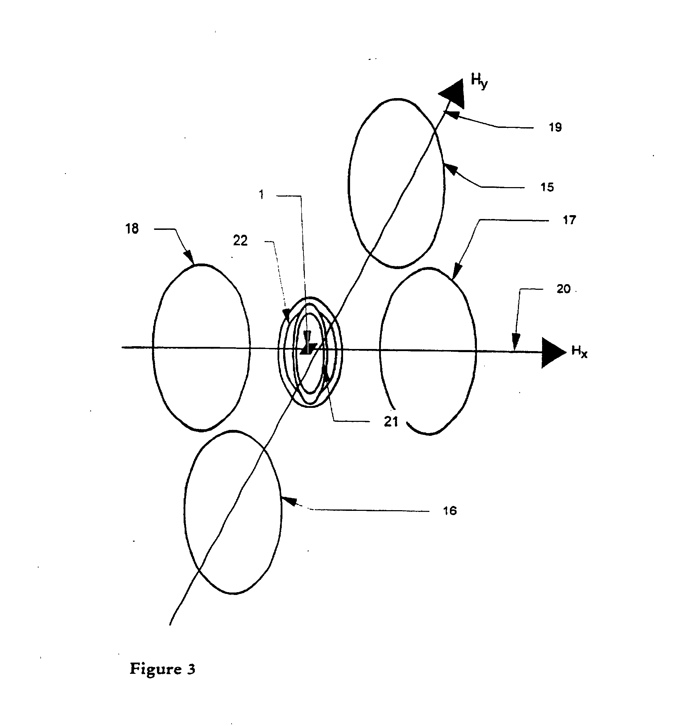

Figure 3 illustrates the concept for a '2-D scanned interrogation system'. Such a system can interrogate one tag in the interrogation volume 6, whose orientation is substantially in one plane. This type of system is the simple form and will initially be used to explain the interrogation system operation. The tag, 1, is interrogated by a magnetic field produced by 2 pairs of 'transmit' coils, 15 and 16, 17 and 18. The transmit coil pair, 15 and 16, produce an H-field $H_y$, 19. This magnetic field will be substantially uniform across the read aperture. The term 'uniform' is used to describe a vector field that has substantially the same amplitude and direction over a spatial volume. Coils 18 and 19 produce a magnetic field in the direction $H_x$, 20. The receive coils 21 and 22 are both arranged such that their magnetic axis (defined as the vector along which an impinging magnetic field vector produces maximum electromotive force - emf) is aligned to the $H_y$ and $H_x$ directions respectively.

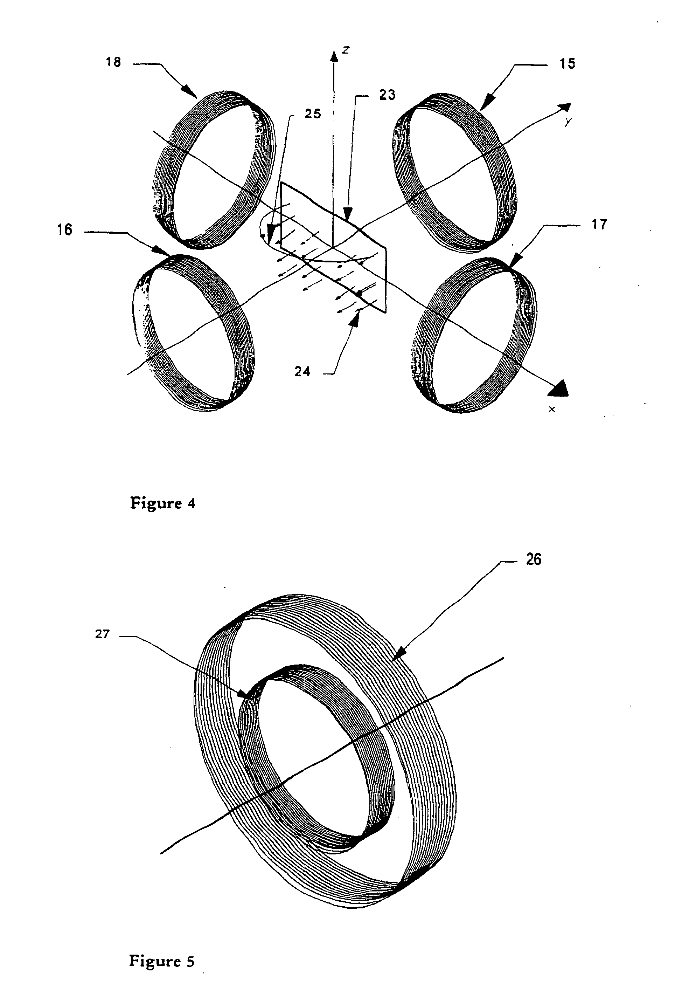

Each receive coil, 21 or 22, comprises two short solenoid coils of differing diameters. These two solenoids are shown as 26 and 27 in figure 5. In the example embodiment being described, coil 26 is 119mm in diameter, 25mm long and comprises 60 turns of 0.355mm diameter enamelled copper wire (ecw). Coil 27 is 86mm in diameter, 25mm long and comprises 110 turns of 0.355mm ecw. The two coils 26 and 27 are connected in series to yield the combined receive coil 22. The receive coil 22 has approximately 1mH inductance and 8 ohms resistance. Coil 21 is similar, although the diameter is slightly reduced to allow the coils to be orthogonal about the same centre point with coil 21 fitting within coil 22.

The operation of the receive coils is now described. The receive coils pair 21, comprising coils 26 and 27, are designed such that in the presence of the transmit magnetic field, 20, the emfs produced by coils 26 and 27 are equal and opposite. Such an arrangement is described as 'balanced' and is achieved by a number of techniques obvious to those experienced in the art. The methods include varying the turns ratio between the coils, slight distortions in the enclosed coil area or very small orientation changes. When a tag or any other magnetic material is placed inside the coil 27, its property of permeability causes the magnetic field flux lines to link with the material. The effect is to cause more flux to flow inside coil 27 than would be the case with no magnetic material. The coil, 21, output emf is proportional to the rate of change of linked flux, and when a.c. magnetic fields are being used, a net output voltage is observed from the pair of coils, 26 and 27 when magnetic material with permeability is put inside coil 27. This feature is known art and is used by magnetometers, instruments used to characterise magnetic material properties. The feature of the receive coils 21 or 22 used in the invention is that they detect permeability changes in the tag material whilst being insensitive to the transmit magnetic fields. Whilst receive coil 21 is insensitive to the transmit magnetic field, 20 through 'balance' it is also insensitive to the transmit field, 19 because of its magnetic axis is orthogonal to the field, 19.

The operation of the transmit coils will now be described in relation to Figure 4. The transmit coils are arranged in pairs, each pair producing an orthogonal magnetic field. Coil pairs 15 and 16 are electrically connected in series. In the example, embodiment coil 15 comprises 90 turns wound over 3 layers with 1mm ecw and is a short solenoid 30mm long and 150mm diameter. The combined inductance of the coil pair 15 and 16 is 3.3mH. The coil pair 15 and 16 are 110mm apart along their magnetic axes. The coil aperture is a 'rounded square'. This allows the second coil pair 17 and 18 to sit inside the diameter of the other transmit coils, similarly spaced 110mm apart. The important feature is that the magnetic fields, 19 and 20, produced around the tag are uniform and orthogonal. The field produced by each coil pair is about 2.75kA/m. Each coil pair is driven by a current waveform.

The transmit current waveform is designed to produce an H field from each coil pair:

$$H_x = A \cdot \cos(\omega \cdot t)$$

$$H_y = A \cdot \sin(\omega \cdot t)$$

The resultant field vector produced is a uniform field, 24, perpendicular to plane 23 and spinning, 25, around the z-axis at the rate $\omega$ radians per second. In the embodiment described $\omega$ is set to about 144Hz (the field 'spins' 360° 144 times per second). The upper level of this frequency is set by the speed at which the material flips magnetic state. The lower limit is set by the desired data read rate, and an increased level of Barkhausen jumps and switching point instability in the magnetic material at low rotation rates (e.g. 20Hz).

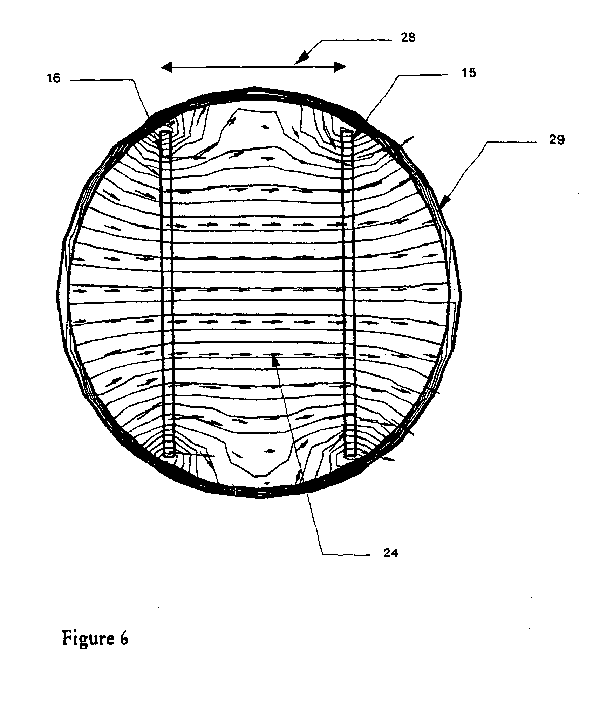

Figure 6 is the output from a two dimensional magnetic field model for one set of transmit coils 15 and 16. The coils are physically separated a distance apart, 28, along their magnetic axes. In the model a soft magnetic shield, 29, is provided. This arrangement of coils is similar to a 'Helmholz' arrangement. The coils produce a 'uniform' magnetic field, comprising vectors, 24, over the interrogation volume.

### Method of detecting magnetic element

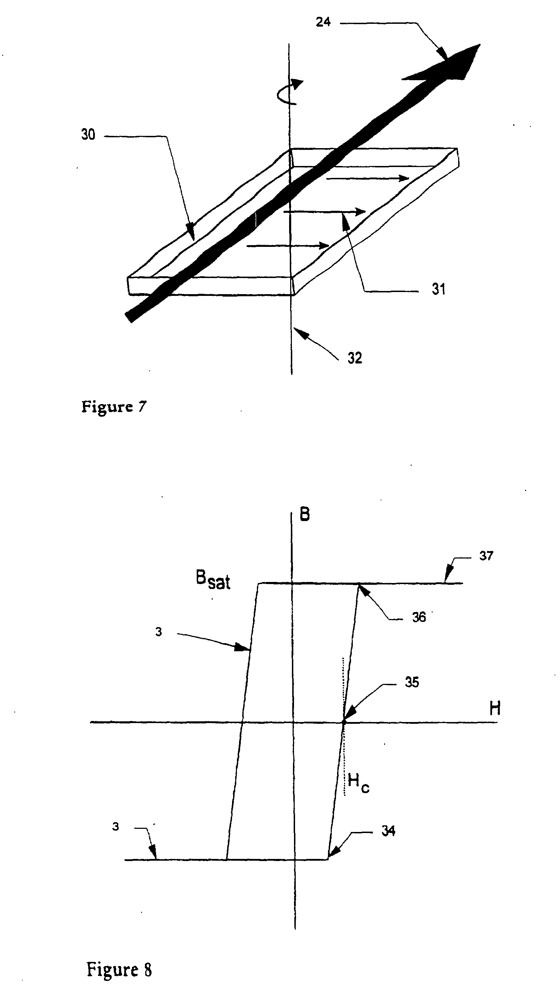

The operation of a single-element data tag is now described referring to figures 7 and 8. The tag element, 30, material is a thin film sputtered coat of magnetic material on a PET plastic substrate. Material manufactured by IST of Zulte, Belgium and marketed under the trade name Atalante is suitable (part number - SPR97017A). The material has 0.9 micron of magnetic material sputtered onto a 23 micron PET film. The tag element, 30, in one arrangement is 10mm square. The volume of magnetic material affects the received signal levels. The magnetic material has a property that causes it to be sensitive to the direction of the magnetic field applied. Specifically as shown in figure 7, in the presence of a 'cross-axis' magnetic field, 24, which is orthogonal to the material alignment direction, 31, the soft magnetic material will not saturate. The materials characteristics are described in relation to figure 8. When H-field is applied along the alignment direction, 31, until the material coercivity is overcome (about 5A/m), there is no material magnetisation (B field produced by the material). At point 35, the material starts producing magnetisation, increasing rapidly to point 36. The slope of the line between points 35 and 36 is the permeability of the tag (material permeability in the alignment direction is 50,000 at d.c.). The tag should have high permeability.

Beyond point 36, the material is fully saturated and further increase of applied field to point 37 does not produce more magnetisation. For reference the applied H-field to cause saturation is about 40A/m (c.f. the Earth's magnetic field is about 80A/m). The material has excellent directional properties. The cross-axis saturation field is defined as the value that a field orthogonal to the material alignment direction, 31, has to be to cause saturation. The value is about 3kA/m. If the applied cross axis field direction is rotated by, for instance, 1°, it will produce a component in the material alignment direction, 31. If the operating field level is just below cross axis saturation value of 3kA/m then a 1° misalignment away from exact cross-axis direction results in a field roughly 1/60th or about 50A/m along the material alignment direction. This field level will be sufficient to saturate the material. It can be seen that the tag magnetic element can be made into a sensitive magnetic field orientation detector.

Stated differently, the tag element material has a directional property illustrated by an easy-axis, 31. The easy axis is defined as the axis along which the material is most easily magnetised by an externally applied magnetic field. A magnetic field applied orthogonal to the easy axis has zero net component along the easy axis direction and results in zero magnetisation M in the element. The cross-field saturation point is defined as the magnitude of the magnetic field orthogonal to the easy axis that results in the material being saturated.

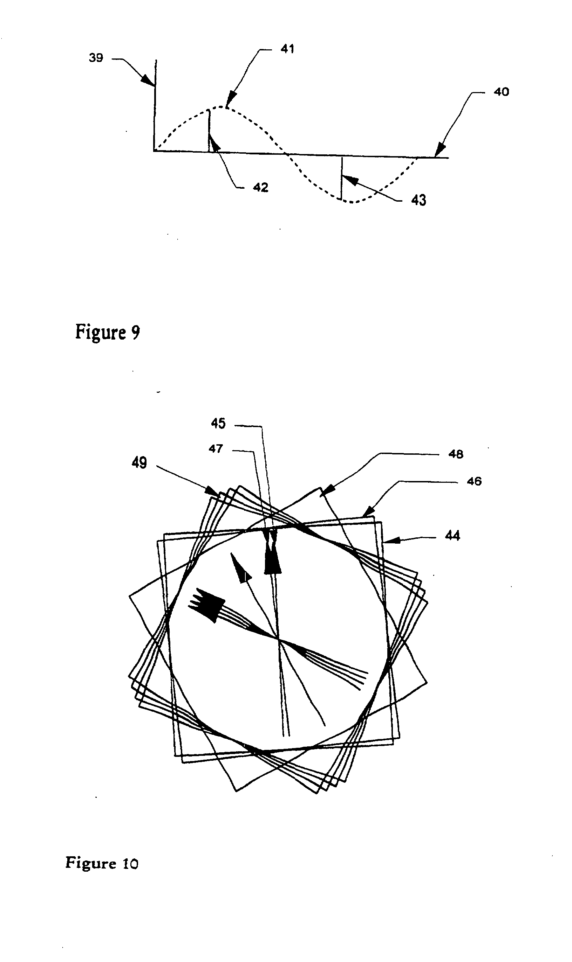

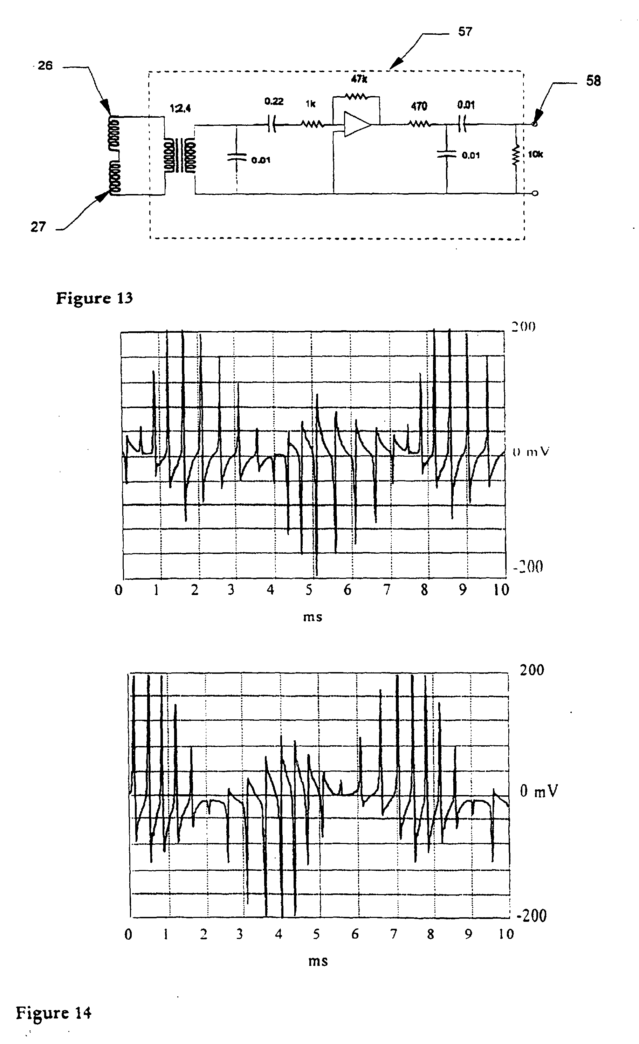

The tag element read operation with relation to the interrogation system is now described. The transmit field, 24 is caused to rotate at a rate of 144Hz. Twice per rotation, the field 24 will be orthogonal to the material alignment direction, or easy-axis, 31, and the magnetisation of the tag element will have a zero crossing. At all other times the tag material remains in saturation. As the magnetic field, 24, spins through the direction perpendicular to the material alignment direction, 31, the tag material will transition through points 33, 34, 35, 36 and 37. The other zero crossing completes the other part of the B-H loop, 38. As the applied transmit field resolved along the material alignment axis, 31, passes from point 34 through 36, then the receiver coil pairs will detect the (rate of) change of magnetisation in the tag element. Figure 9 represents the received signal output of the system. Axis 39 represents the measured voltage from the receiver circuit (shown in figure 13) and axis 40 represents time. Line 41 represents the drive current waveform of a transmit coil and shows one complete 'spin' through 360° of the transmit field. Line 42 represents the 'blip' from the tag element received as the transmit field passes the direction orthogonal to the material alignment direction, 31. Note the 'blip' is repeated, 43, when the transmit field vector, 24, has rotated through 180°.

The 'resolution'-(blip width) achieved by the system is a function of the tag element material (and shape). Specifically, better angular resolution is achieved when material cross-axis saturation field is higher, and material permeability is higher. Other considerations are the direction of the tag element plane to the transmit field plane, stray d.c. and a.c. fields and system receive operating bandwidths.

Reference is directed to US-A-5083112 for details of other materials and methods of manufacture of thin film magnetic layers.

## Multi-element Magnetic Data Tag

Figure 10 illustrates the construction of a multi-element data tag. A square piece of magnetic film material, 44, with an alignment direction, 45, is positioned at a specified angle and placed upon a similar piece of material, 46, with alignment direction, 47. For example, the film material 44 is the same as that used for the single element tag described above. In one example the angular displacement used to represent each bit opportunity is constant and is 3.75°. Similarly, other layers of film material, 48 and 49, are added to the tag to build a sandwich with differing alignment directions. In the example tag in figure 10, a data '1' is represented by having some material in a particular alignment direction and data '0' by having no material. The 3.75° spacing, over the 180° of 'data code' space corresponds to 48 bits. The theoretical data capacity is $2^{48}$-1 or 2.4x10$^{14}$ codes.

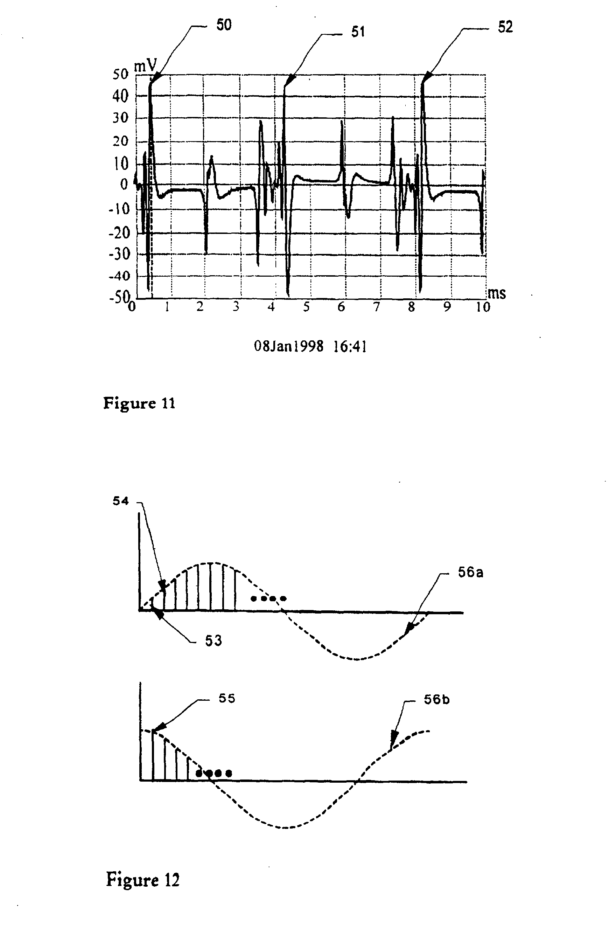

In practice, the data density will be less. The absolute rotational orientation of the tag relative to the transmit field will be uncontrolled (reducing data capacity by a factor of 48, with another factor of 2 for direction ambiguity, clockwise or anticlockwise). Coding schemes that allow automatic clock recovery will give much greater tolerance to short term 'jitter' on the data. The primary error sources are the reproducibility of material alignment direction in the manufactured stock material, aberrations of transmit field constant rotational rate, errors in layer alignment during manufacture, magnetic interference to the interrogation field from external sources and 'tilt' of the tag with respect to the plane of the interrogation field. Figure 11 illustrates a real measurement from the prototype tag, which is 10mm square and 0.5mm thick. The tag is constructed using 'spray mount' for the adhesive binding of the material layers together and optical manual alignment of the material directions. The tag was trimmed to give a circular area profile. The coding scheme is as described above with material present in bit positions 1 through 9, 16 and 40. The 'blip', 50, represents one layer of magnetic material and this element produces a similar response, 51, after the transmit field has rotated 180°, and again at 52 after a full revolution of the field after 1/144$^{th}$ of a second.

## Receiver Coil Arrangement

Figure 12 illustrates the signals produced by the receive coils, 21 and 22. The tag element outputs, 53 and 54, are received by receive coil, 21. The orthogonal receive coil, 22, produces outputs illustrated by 55. The coils are orthogonal and hence the received signals in each channel are weighted by coil 'direction sensitivity' amplitudes 56a and 56b. A tag reader interrogation system will 'trigonometrically' combine the two receive channels to yield a signal of constant amplitude. This effectively synthesises a receive coil arrangement (coils 26 and 27) that is physically spinning at the same rate as the transmit field and with the sensitive magnetic axis orthogonal to the instantaneous transmit field direction. ,

## Processing Electronics

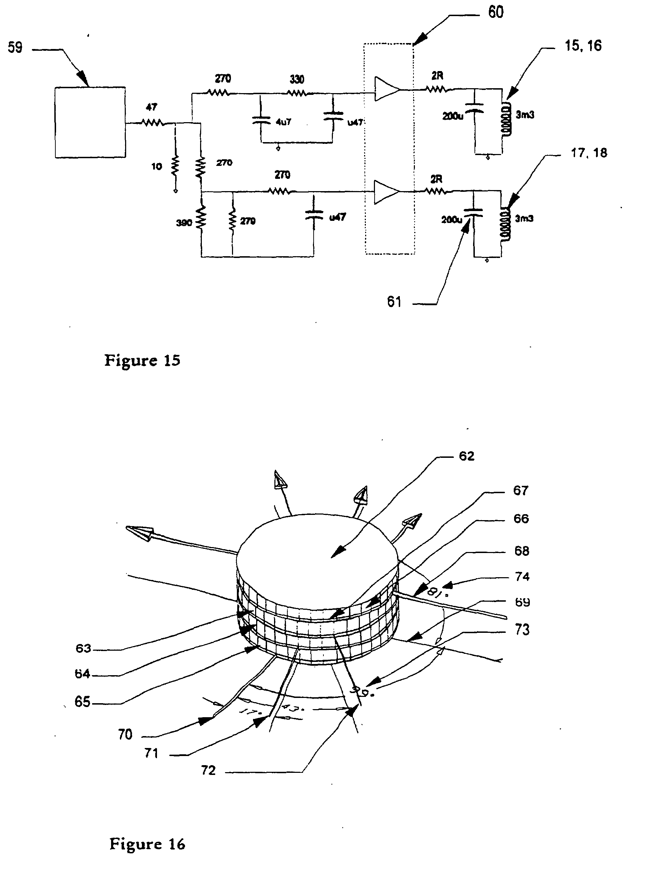

Briefly, the receive circuit used in the embodiment will be described with reference to Figure 13, and the transmit circuit with reference to Figure 15. In Figure 13, the balanced receive coils, 26 and 27, are connected to amplifying and filtering electronics, 57, to produce an output signal at 58. The characteristics of the circuit, 57, are a high pass filter (HPF) at around 300Hz and a low pass filter (LPF) at 20kHz. The transmit magnetic field is rotating at 144Hz and hence there is no requirement for d.c. coupling. The HPF characteristic removes residual breakthrough from the transmitter into the receiver caused by unwanted receive coil imbalance and further improves transmitter to receiver isolation. The LPF characteristic limits high frequency noise, whose sources are both thermal, electronic (amplifier), and from interfering a.c. magnetic sources. Optimum performance would be a receiver limited by the thermal noise from the receiver coils, screened from outside interference and with a receiver bandwidth matched to the characteristics of the tag element impulse response induced by the transmitter. In practice, a LPF filter at 20KHz is an efficient compromise. The receiver gain from the circuit, 57, is around times 50. The circuit is repeated for the orthogonal receive coil set.

The measured amplitudes for both orthogonal receive directions at receiver amplifier output 58 are shown in figure 14. The tag is a 10mm circular calibration tag with 8 layers spaced at 22.5°. The tag response illustrated in figure 11 is about 50mV peak and the rms noise output of the system is 7μV. Hence, a tag detected signal-to-noise ratio in excess of about 65dB is obtained with the prototype system (c.f. 15dB usually required in communication channels for reasonable data error rates).

With this embodiment the following receive signals were obtained from the receive circuit: 130mV for a 22mm diameter tag, 30mV for a 6mm square tag and 2mV for a 2.5mm square tag.

In figure 15, the transmit drive arrangement is shown. An a.c. signal source, 59, generating a 144Hz signal is split and filtered by two passive networks designed to give about 90° differential phase. A standard domestic 25W/channel audio amplifier, 60, provides the drive for the two orthogonal transmit coils pairs 15 and 16, 17 and 18. Parallel matching capacitors, 61, are added to reduce the current needed from the amplifier. The drive current is set to achieve the appropriate transmit field level (i.e. below the cross-field saturation level for the material). The measured coil drive voltage is about 35V peak-peak. This generates transmit currents of around 4A rms, yielding a rotating transmit field amplitude of approximately 3 kA/m. The upper limit on this field level is determined by the tag material saturating in the cross axis direction, with the consequent suppression of the sharp magnetisation transitions which encode the data. This occurs at around 4.5 kA/m for the Atalante film. The lower limit comes because the transitions become less sharp, and in addition the magnetisation of the other layers in the tag becomes more significant, appearing to make narrow angle gaps wider.

The decoding of the received signal into data is achieved by data processing. In the example embodiment, the two receive channel signals obtained are digitised by a 'PICOSCOPE', available from Radio Spares. Data processing is accomplished in MathCAD to implement the linear and non-linear processing to further filter, recover the data clock and decode the tag data. This program runs on an IBM PC. These techniques are well known in the art.

Coding schemes and data recovery from the tag can use techniques known in the art. Some analogies the inventor has proposed include optical bar code data encoding. These are designed to cope with distortions in the received signal caused by 'warping' of the code. If data is represented by analogue quantities, the data capacity becomes limited by information theory (Shannon) and is a function of signal-to-noise ratio, and of course the system angular resolution. These are functions of the tag construction and the system operating bandwidth.

**Alternative Tag Coding Schemes**

The inventors have measured and described a number of error sources that will influence the choice of coding system. The material and tag manufacture will lead to small variations in the achieved alignment direction, resulting in short term 'data' jitter. If the plane of the tag is tilted in the interrogation system, the geometry of the situation will cause errors on the measured tag element positions. This is a matter of simple geometry and 10° of tilt will result in a peak position change of 1.5%. 20° of tilt represents 6° of peak error in the 'blip' angular positions. Note that the error is slowly varying and a (spatial position) harmonic of the transmit field rotational rate. One possible solution is to use geometric or other incremental progressions of tag element spacing, as described in detail below. For instance, two bits of data can be coded by elements spaced at intervals of 3.75°, 5.5°, 7.6° and 10.1°. Over the 180° of 'data space' available, roughly 20 blocks could be encoded (40 bits). D.c. magnetic fields are a further source of possible spatial harmonic error, although it can be demonstrated that the system is quite tolerant to these.

Figure 16 illustrates a tag constructed using a 'logarithmic-gap' code to encode two decimal digits. The tag is constructed from 4 layers of thin film 'Atalante' material, 62, 63, 64 and 65, 10mm in diameter. Each layer of film material consists of a PET layer, 66, and an active magnetic layer, 67, with a magnetic alignment direction (also known in the art as 'easy-axis'), 68. The direction 69 is the projection of the material alignment direction, 68, onto a horizontal plane. The layers 63, 64 and 65 have material alignment directions 70, 71 and 72. The layer 67 is aligned at an orientation of 99°, 73, relative to layer 65. The other layers are at angles of 17° and 43°. 'Gaps' defined as relative angles between layers and using layer 65 as the start point are 17°, 26° and 56°. The magnetic data tag has 180° of 'data-space' and the 81° gap, 74, is referred as the 'big gap'. The 'big-gap' is always the largest gap and is a state used to determine the reference layer from which to decode data.

The increasing increment between successive gaps is determined by an analysis of the likely errors when manufacturing and reading tags. The 'logarithmic-gap' code is a combination of an arithmetic and geometric progression, and is based on the primary system errors described above. These have different contributions depending on the size of the gap. For small gaps, the most significant errors are related to the material and layer alignment, and magnetic interaction of the other layers in the tag with the drive field. This sets the minimum gap, and the minimum acceptable increment between gaps. For larger gaps, the primary errors are geometric errors caused by tilted tags, and a non-constant rate of rotation of the interrogation field vector. This latter effect arises when the tag is not at the centre of the interrogation volume, and by tolerances in the reader transmit drivers. These large-gap errors are, to first order, proportional to the gap size. There is a final constraint that the longest tag must physically fit into the available 180° data space. Hence, to achieve the most efficient coding scheme, codes which result in particularly large total angles are omitted. This allows significantly larger angles to be used with only a minute reduction in data capacity. This is the source of much of the detail and complexity in the coding schemes. Lower data-capacity tags are able to have larger increasing gaps, with better tolerance to the errors described above.

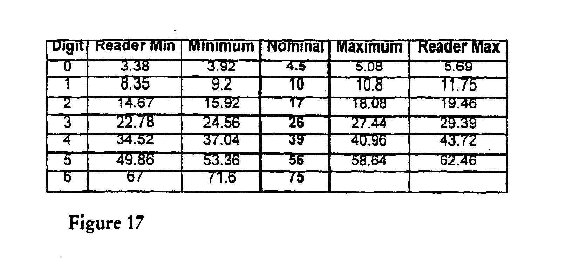

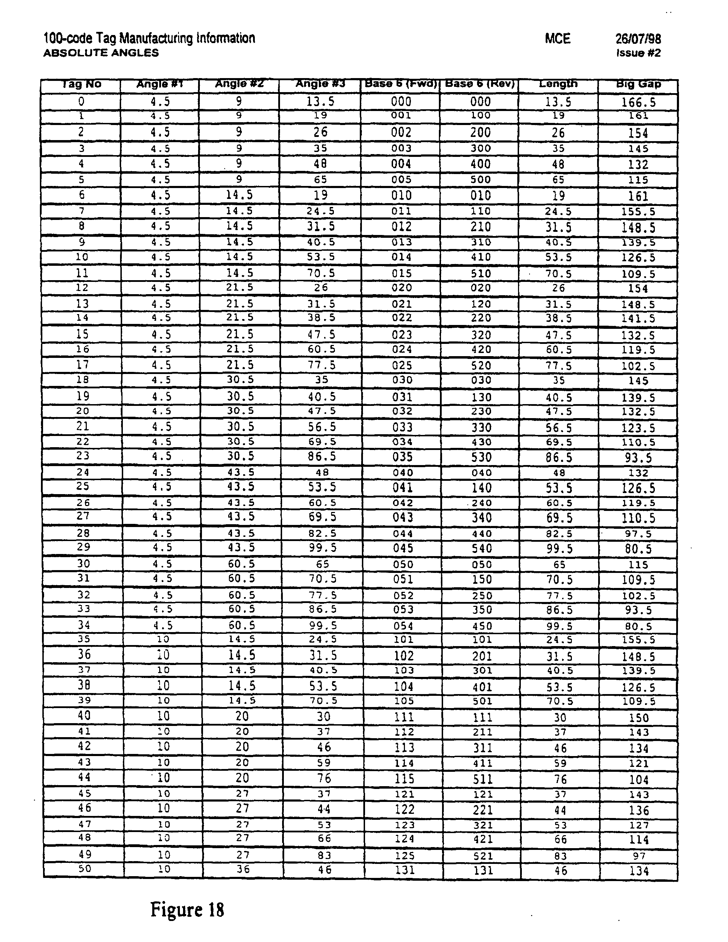

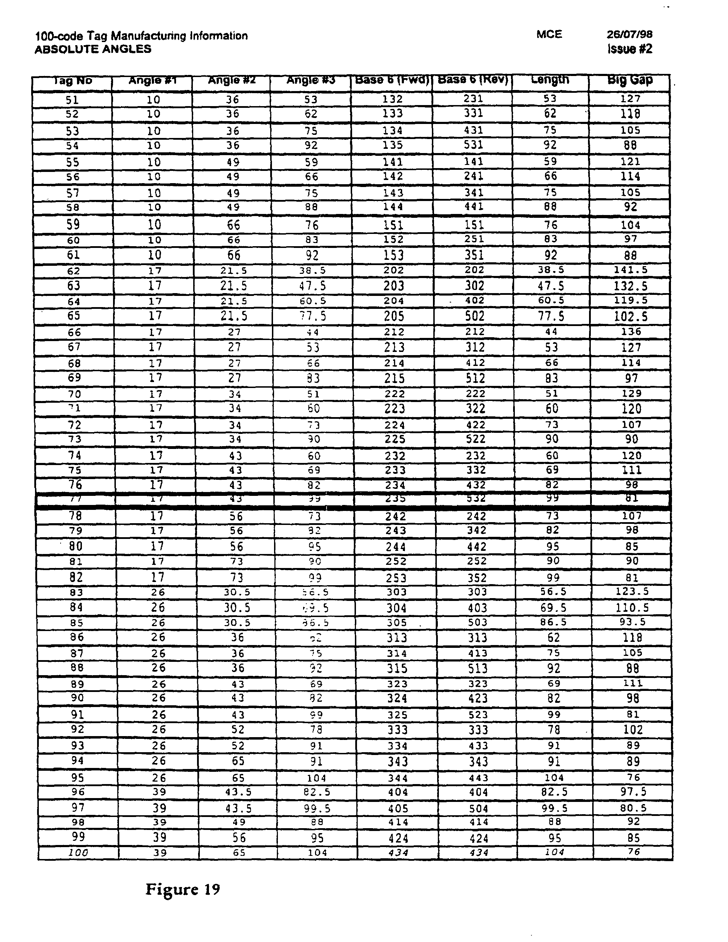

Figure 17 is the manufacturing data used for 'gap' definition in the tag shown in figure 16. Seven different 'gap' states (digits) are used with nominal gaps as shown. Manufacturing tolerances and valid read data tolerances are also shown. State 6 is the 'big-gap'. States 0 to 5 define the data for each measured 'gap'. Figures 18 and 19 show the required absolute material alignment directions for the four layers for the 100 possible codes. The example tag shown in Figure 16 is '77'. The three 'gap' states are '2', '3' and '5'. The scheme also requires that the reverse 'gap' sequence '5,3,2' decodes to 77 and this feature allows a tag to be placed either way up in the interrogation volume.

## Tag Manufacturing Method

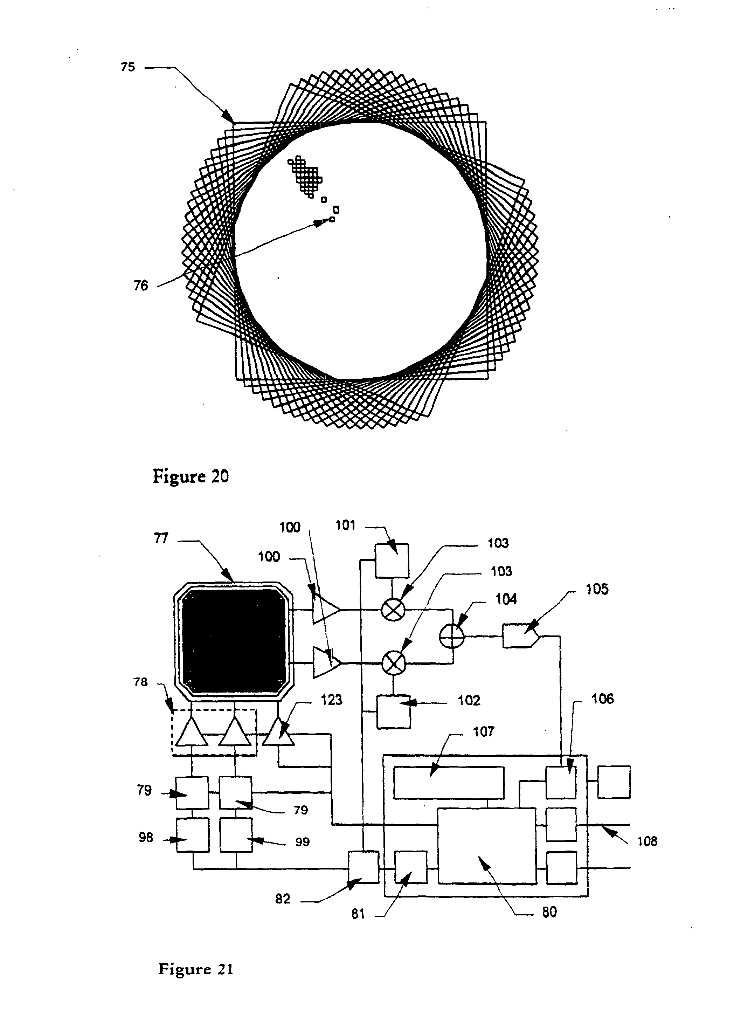

The data content of the data tag is established on manufacture. The tag has the property that when sub-divided, for instance by cutting in half, the material alignment direction is unaltered and the two tags when read will have the same data code. Cost-effective tag manufacture is an essential feature and Figure 20 illustrates one method to produce a large number of data tags with the same code. Many sheets, 75, of stock material that is manufactured on a continuous web around 1m wide, are cut into 25cm x 25cm squares. The sheets are glued to give the desired code contained in the orientation directions. The layers are glued by applying a liquid contact adhesive type AD2222 available from Adhesive Technical Services, Purfleet, Essex, UK with a roller applicator that applies a specified 12μm-thick glue layer. This is allowed to dry and the layers aligned optically using a drawing table and precision protractor. The laminated sheet can be cut into smaller individual tags, 76, using a suitable die cutter. The tags are subsequently measured on a 'calibration' reader and the measured mechanical alignments checked against the tolerances established.

The tag shape can be circular, square, rectangular, hexagonal or other shapes not incorporating sharp angles. The factor limiting the shape is the 'shape permeability' and the magnetic elements comprising the tag may have differing amplitude responses due to the shape of that element. The basic technique above can be extended to larger scale manufacturing as appropriate.

Alternatively, custom tags could be manufactured to order. The above technique could be applied to smaller material widths to manufacture specific individual tags. For instance material of width 1cm on a large spool could be cut and positioned at the requested angles by a machine programmed with the required code. The material alignment direction may be measured for each individual layer to improve alignment accuracy. The inventor has found that thermal pressure bonding of the 'Atalante' film is possible. Tag layers 1cm square can be welded by application of around 3N/cm$^2$ force at 270°C. The magnetic material is not affected by this temperature.

## Single-sided reader Embodiment

The 2-D aperture embodiment of the invention described above has the disadvantage that the data tag must be placed within an interrogation volume that is surrounded by coils. The embodiment described below incorporates improved scanning and processing features to avoid displaying read tag data when errors are detected.

A further embodiment of the reader, 14, will now be described where the antenna, 11, is a substantially flat structure and the interrogation volume lies to one side of the antenna. A feature to detect tilted (misaligned) tags is incorporated together with advanced processing algorithms to detect and avoid false reading of data.

The single-sided reader block schematic is shown in Figure 21. The antenna, 77, is driven by a stereo audio amplifier, 78, at an output level under the control of variable gain stages, 79. The transmit signal timing is generated by a microprocessor, 80, buffered by digital timing circuits, 81, before analogue filtering, 82, to a 130Hz a.c. voltage. Phase networks, 98 and 99, provide the quadrature drive waveforms for the transmit drive circuits. The antenna, 77, provides two spatial orientation quadrature receiver outputs that are amplified and filtered by identical low noise amplifiers, 100. Each receive channel is multiplied in analogue mixers, 101, by a sine and cosine weighting signal derived from the transmit waveform by a quadrature splitter, 102 and 103. The two receiver channels are added and differentiated in an analogue summing amplifier and differentiation circuit, 104. The weighting function amplitudes for each receive channel are illustrated by the dotted lines 56a and 56b in figure 12. The resultant signal before differentiation consists of 'blips' at constant amplitude. The differentiation is used to convert 'blip' peaks into zero crossings.

The analogue signal is digitised by an ADC, 105, to a resolution of 8 bits, with 1024 samples representing one transmit interrogation field revolution. Each sample corresponds to about 0.352° of rotation. The digital signal is buffered in a FIFO, 106, for subsequent processing by an 8 bit 8051 family microprocessor, 80. The tag decode data is displayed on an LCD display, 107, and via a serial data port, 108.

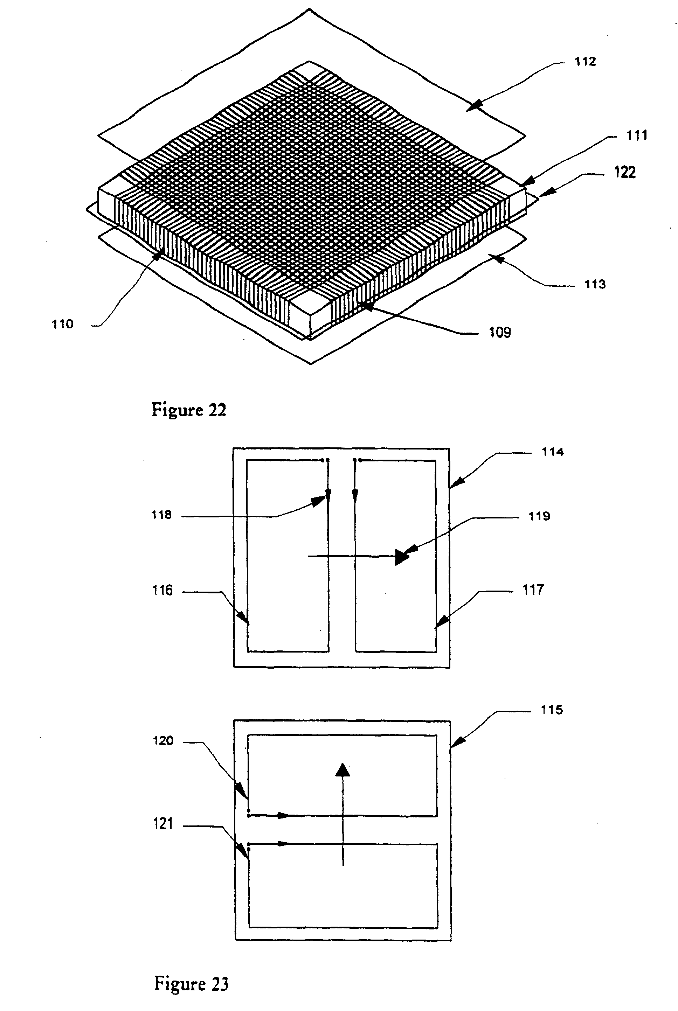

Figure 22 illustrates the components comprising the single-sided reader antenna, 77. The antenna comprises two receiver antennae and two orthogonal transmit antennae. The transmit antennae comprise orthogonal coils, 109 and 110, wound on a mu-metal plate, 111 The mu-metal plate is 70mm square and 1mm thick. In an alternative embodiment, a 4mm thick ferrite plate can be used instead of the mu-metal plate. The coils, 109 and 110, are each three layers of 0.5mm ecw wire with 220 turns total, wound orthogonally as shown. The receive antennae comprises two identical printed circuit boards (PCB), 112 and 113, mounted either side of the transmit mu-metal/coil assembly. Figure 23 illustrates the PCB's copper patterns. Each PCB is double sided with copper track patterns on both sides, 114 and 115. On one side, 114, a 'figure of 8' loop, comprising turns 116 and 117 connected in the sense illustrated, 118, and with 25 turns each (not illustrated) connected in series, forms a quadrapole. The loops, 116 and 117, are connected to have an emf induced by an a.c. magnetic field in the direction, 119. The PCB side 115, comprises turns 120 and 121, identical to side 114, but the pattern is rotated through 90°. Two identical receive PCB's, 112 and 113, are connected together to form two identical receive antennae that have orthogonal spatial sensitivities. The 'figure of 8' antenna comprising loops 116 and 117 on side 114 on one PCB, 112, is connected to the identical loops on the second PCB, 113. The connection senses are in such manner that the generated field from either transmit antenna, 109 or 110, induces zero net voltage in that receive antenna channel, comprising coils on either side of the transmit coils. This is achieved by the physical symmetries. The receive antenna 'figure of 8' configuration (loops 116 and 117) provides rejection of uniform H-field interference (from far field sources). It can be seen that the loops 116 and 117 are sensitive to a magnetic dipole above the board in the direction 119, whilst being insensitive to a magnetic dipole in an orthogonal direction. Loops 120 and 121 are not sensitive to a magnetic dipole in the direction 119. The antenna 77, synthesises the required interrogation magnetic field, 7, and provides receiver sensitivity to tag-induced magnetic field, 9, over the interrogation volume, 6, as achieved by the coil arrangement described in figure 3.

Tags, 1, are placed with their magnetic elements parallel to the plane of the antenna defined by the PCB plane, 112. The active read volume is an area about 3cm in diameter, centred to the PCB, 112, and extending to a distance of approximately 1cm from either PCB, 112 or 113.

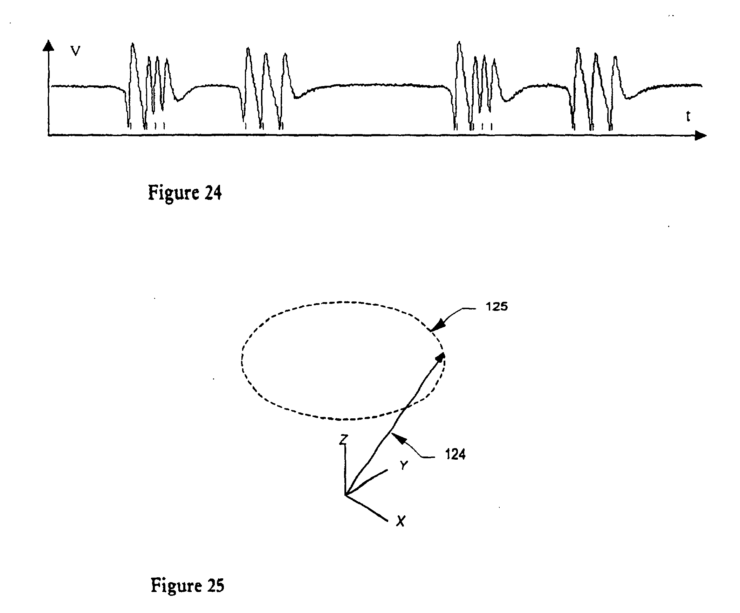

The analogue signal into the ADC, 105, is illustrated by figure 24, and this is for a 7-layer (4-digit) data tag and shows 360° of transmit field rotation.

The antenna, 77, incorporates a third interrogation coil, 122, comprising 120 turns of 0.25mm copper wire, wound onto the transmit coils with the PCBs acting as side plates. The coil is powered by a standard motor switch IC, 123, under the control of the microprocessor. Current can flow in either sense or can be off. This arrangement is used to generate a 'conical scan' magnetic field vector as illustrated in figure 25. The uniform magnetic field produced by coil 122 in the z-direction causes the instantaneous magnetic field interrogation vector, 124, to describe a circle, 125. The 'conical' scan interrogation field vector allows the tag 'tilt' with respect to the interrogation (x-y) plane to be determined as explained below. The uniform z-axis field could be produced by a permanent magnet although this field cannot be disabled. For instance 0.5mm thickness of anisotropic bonded ferrite sheet about 70mm square will give the desired conical scan. The coil, 122, conducts 0.3 A and produces a magnetic field of 500A/m in the z-direction.

**Single-sided Reader Processing Algorithms**

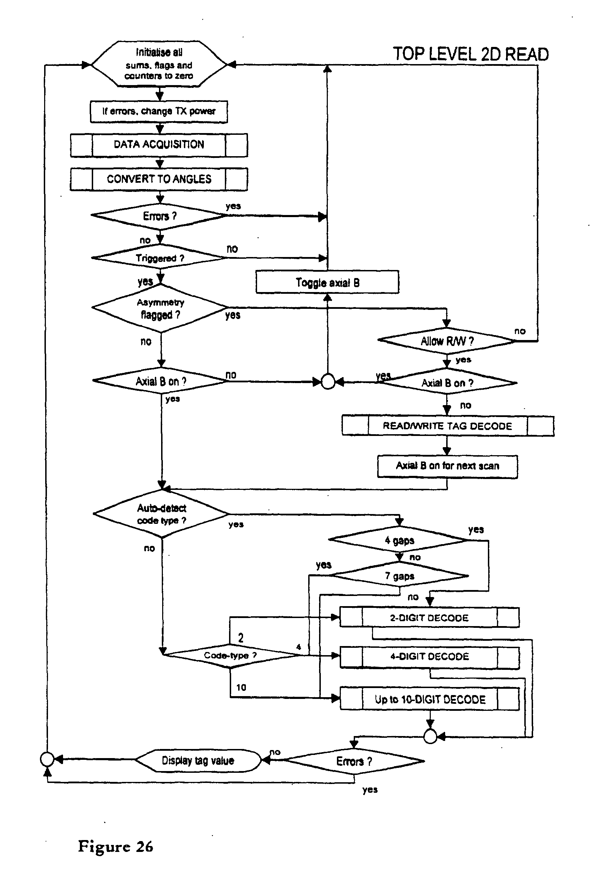

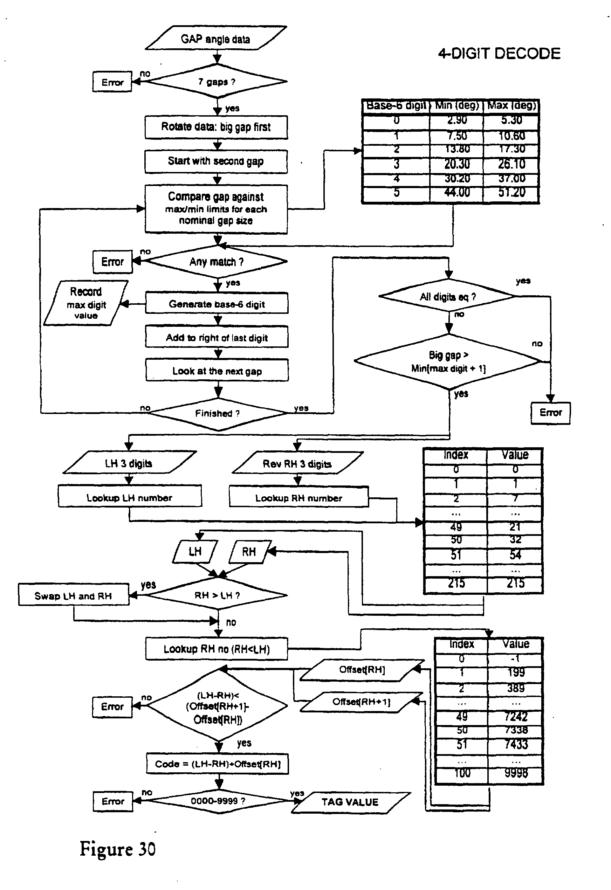

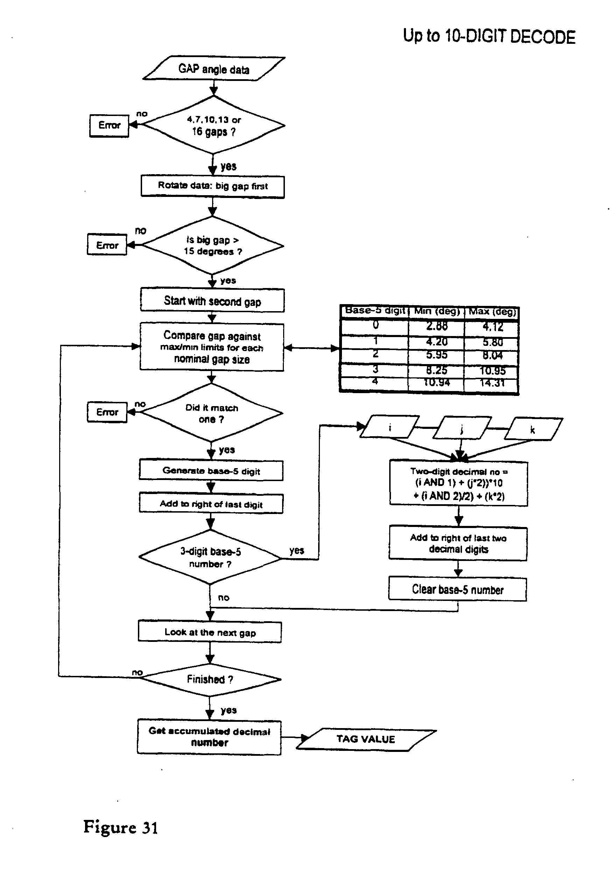

This embodiment of the invention incorporates a number of features in the processing of the receiver signals to reduce the false read probability. These are described in relation to Figures 26 to Figure 31, which are flow charts describing the processing algorithms. These figures do not show details of standard good-practice programming techniques, such as ensuring that array indices are within bounds. They are illustrative of the general form of the algorithms that have been used. All arrays are indicated by elements with square brackets [ ], and are indexed from zero. In some places, array contents are shown for illustrative purposes by tables. Error handling has not been shown explicitly. Recovery from and reporting of errors is a detailed function of the system on which the algorithm is implemented.

The microprocessor input data is illustrated by figure 24, and each data sample consists of 8 bit amplitude, sampled at about 0.352° intervals. There are 1024 samples taken per revolution of the interrogation field.

Figure 26 shows the top-level processing. This shows the reader operating continuously to read data from the buffered (FIFO) data acquisition system. There are a number of user-programmable options.

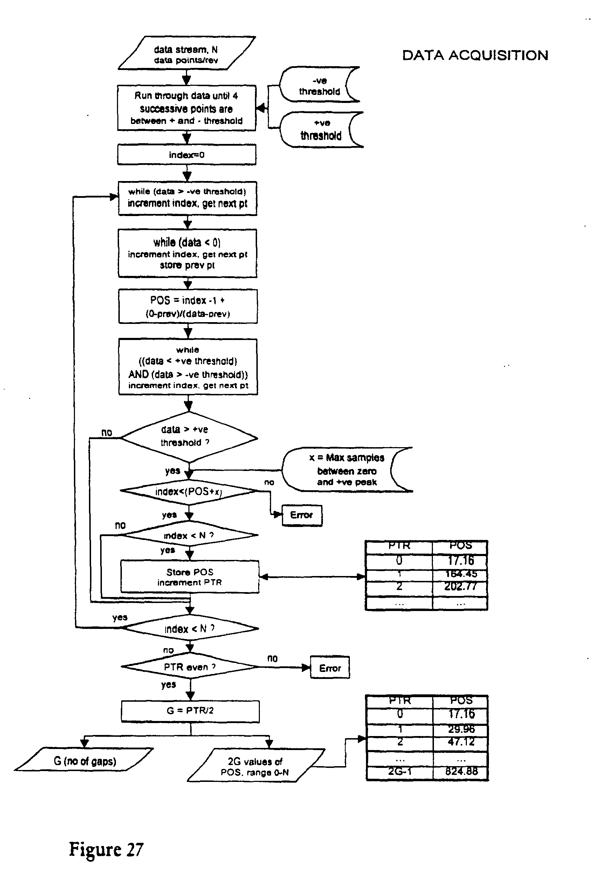

Figure 27 shows the data acquisition process. The data decoding process can run in real time, taking data values from the data acquisition FIFO as they become available. In the single-sided reader embodiment, there are 1024 points for each complete revolution of the transmit field. A very simple zero-crossing detector is used, which looks for a signal below a negative threshold, a negative-positive crossing, and a signal exceeding a positive threshold, in sequence. If this sequence is not found, the received transient is ignored. The zero crossing time-index is interpolated to a fraction of a sample interval, and successive values are stored in an array POS. This array is expected to contain an even number of elements - e.g. for a 7-layer tag, there will be 14 entries.

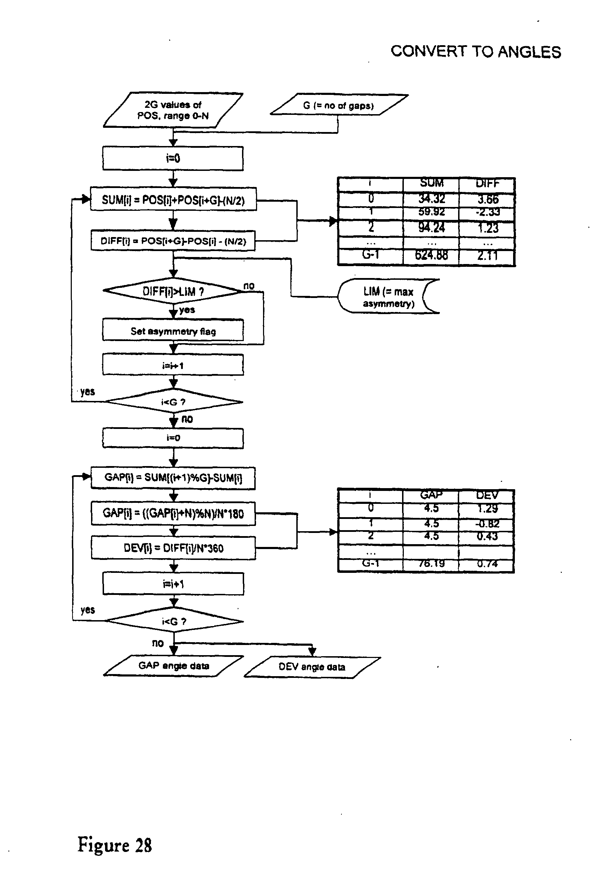

Figure 28 shows the algorithm to convert the raw zero-crossing time indices into angular gaps. Each magnetic layer generates two zero-crossing signals at about 180° for each interrogation field rotation and these are processed together. The average of these two values results in a value with reduced effect from external magnetic fields. The difference gives information on the external field level. These numbers are converted into degrees (based on the number of samples/revolution) and stored in arrays GAP and DEV respectively.

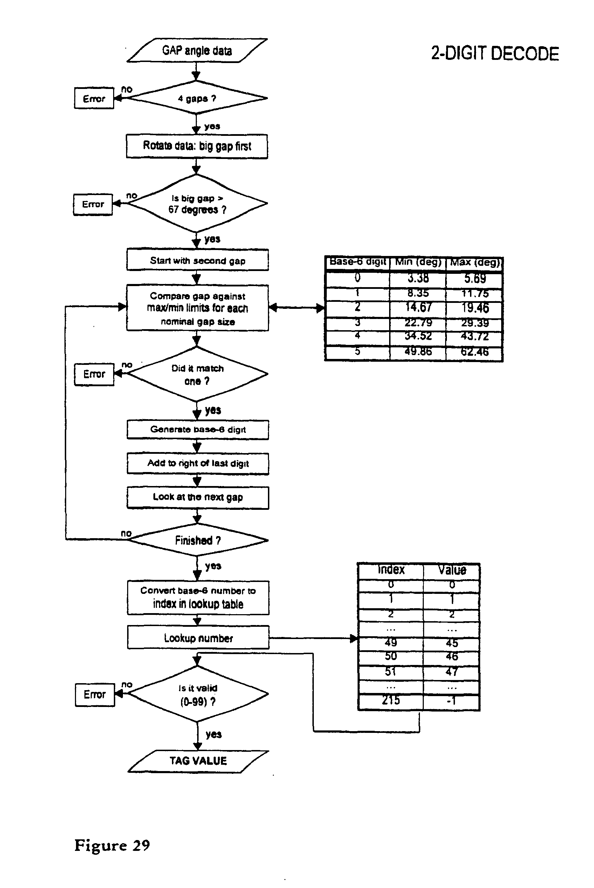

Figures 29 to 31 show three different decoding algorithms for 2-digit, 4-digit, and up to 10-digit data tags. In all cases, the first step in the processing is to cycle round the elements in the GAP array until the first element is the largest ('big-gap'). A check determines whether this meets the big gap criteria, as defined by the coding scheme.

Each tag value decoding algorithm then compares all the remaining gaps with tabulated allowable values for the gap sizes. The index of the matching element from the table gives a base-6 (or base-5) digit. In the 2-digit scheme, the three gaps give three base-6 digits, which are combined into a single number spanning the range 0-215 (decimal). Only some of the possible 216 codes are allowed, and the number is used to index a 216-element look-up table, which contains values for all the valid forward and reverse base-6 codes. The invalid states generate flagged errors. This look-up table may be generated from the table in figures 18 and 19, by searching the columns "Base 6 (Fwd)" and "Base 6 (Rev)" for each successive base-6 number, and cross-referencing this to the "Tag No" in the first column. If the base-6 number is not listed, it is invalid.

In the 4-digit algorithm, the first three base-6 digits give one number (referred to as LH), and the order of the second three base-6 digits is reversed to give a second number (referred to as RH). Clearly, if the tag has been read upside-down, LH and RH are reversed. RH and LH are converted via a look-up table, which sorts the 216 possible values by the physical length of the angles they define. The coding defines that RH is always less than or equal to LH (both in value and angular terms), so they are swapped if necessary. This means that the correct tag value will be decoded, even if the tag is upside down. The smaller number indexes an array of offset numbers. The tag value is generated by adding the difference between LH and RH numbers to this offset.

In the 10-digit algorithm, each set of three base-five numbers is used to generate a two digit decimal number. These are concatenated together to form the final decimal tag code. The number of digits in tag code is always an even number between 2 and 10, depending on the number of elements in the tag.

### False Read Suppression Techniques

The reader incorporates many special features used to improve false reading performance and these are now described.

Each layer of the tag generates two blips 180° apart (nominally) when the tag is horizontal and being correctly read. A d.c. or a.c. external interfering magnetic field will distort the instantaneous interrogation magnetic field vector and cause these blips to be not 180° apart. The processor checks the blip spacing and rejects readings that are out of tolerance by more than 4°. Note 'tag is horizontal' refers to the state when the tag is always orthogonal to the axis of rotation of the interrogation magnetic field vector.

A coil, 122, can generate a (d.c.) magnetic field orthogonal to both transmit coils and in the direction of the transmit field rotational axis. This leads to a conical scan and is illustrated in figure 25. A non-'horizontal' tag will be subject to a component of this d.c. field and this component increases with increased tag tilt angle from the 'horizontal'. The effect of this component is to modify the detected gap spacing.

The processor, 80, validates the gap spacing between blips from each layer and if the change from the expected 180° exceeds 4° the reading is rejected.

The processor distinguishes between '180° layer errors' caused by tag tilt or / and external magnetic field through changing the direction of the applied d.c. bias field and monitoring the change in the 180° layer errors.

The transmit drive field level is controllable under processor control. This allows optimum interrogation field on the tag as tag read distance and material varies. With low drive field levels and with small gaps, the magnetisation dipole of each tag layer can locally alter the interrogation field direction on the tag. The effect is that, at low drive levels, the gaps move apart. Larger drive field levels compensate for this effect, although the tag will cease to function if the cross-field saturation level is exceeded.

The processor, 80, incorporates other processing features to ensure that no false readings are displayed. These check that the number of detected peaks are correct for the tag coding scheme, the received amplitudes are correct and that the received signal 'shape' is correct (e.g. the time between the minimum and the maximum, and symmetry about zero).

### Programmable Data Tags

The data tags described above are read only and the data content is established on manufacture. An alternative arrangement of the tag allows a programmable data tag to be constructed. The single-sided reader described above can read programmable tags with a modified processing algorithm described below.

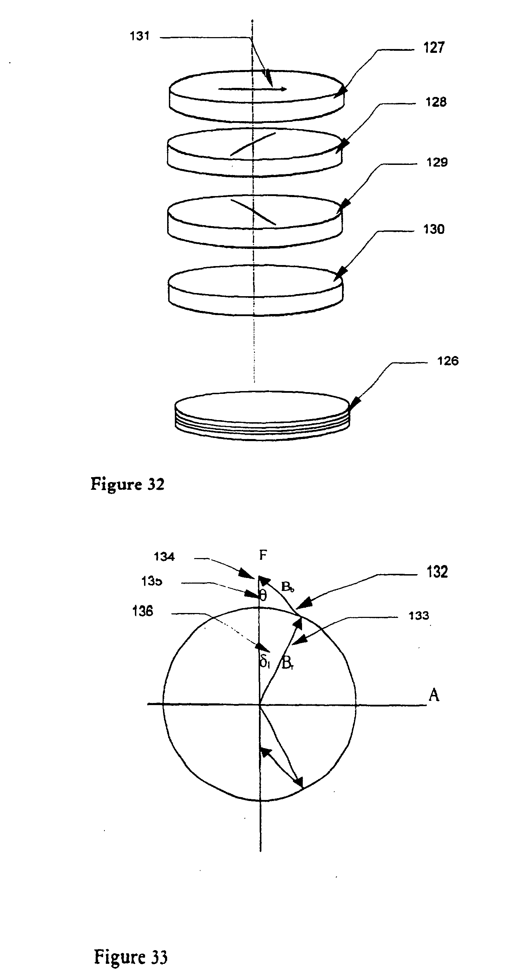

Figure 32 shows a programmable data tag, 126, and this comprises three layers of Atalante Film, 127, 128, 129, and a hard magnetic layer 130, all glued to form the tag, 126. Layer 130 is 15μm thick nickel 10mm in diameter and this will give a remanence flux of about 1000A/m. The 'Atalante' film layer, 127, has a material alignment direction, 131. The direction of the remanence flux in layer 130 can be varied over 360° of orientation direction space. Data 'programming' is achieved by magnetising the permanent magnetic material, 130, with a large external d.c. field of defined orientation that is subsequently removed.

Different magnetic materials require different programming fields. The nickel layer requires a field of about 3 kA/m. A low-coercivity ferrite layer (such as audio tape) requires about 25 kA/m. Both of these layers may simply be magnetised using a standard anisotropic bonded ferrite magnet (75 x 50 x 20 mm) magnetised across its narrow side, by placing the magnet edge-on to the tag in the desired orientation, and drawing it away whilst maintaining the same angular orientation. High-coercivity barium ferrite may also be used, and requires 200 kA/m to magnetise it, conveniently achieved using a rare-earth magnet. The advantage of the barium ferrite is that, although it requires a larger magnetisation field, it is harder to erase, and it is isotropic, unlike the lower-coercivity ferrite. Cro-Vac from Vacuumschmelze is suitable for larger tags (e.g. 20mm diameter), as it only available in thicknesses from 40 μm upwards.

The construction of the tag is an important issue to achieve a reliable programmable feature. In particular, best results are achieved if the diameter of the hard magnetic layer exceeds the diameter of the soft magnetic layers by around 20%. The thickness required is proportional to the diameter, to achieve the same actual field level. For example, a polymer-bonded ferrite layer of 40 μm thickness is suitable for 10-mm diameter tags. This is typically achieved using three layers of standard audio tape. In this case, the layers should be laminated at different angles, as this material is not isotropic.

Figure 33 shows the interaction between the magnetic field $(B_b)$, 132, from the permanent magnetic bias layer, 130, and the rotating interrogation field, 24, denoted by $(B_r)$, 133, for a single soft magnetic layer, 127, with a material alignment direction, 131. The orthogonal direction to the material alignment direction is denoted by F, 134. The angle between the hard magnetic programmable direction bias layer and F is denoted by $\theta$, 135. The angle between the rotating field and F at the point where the magnetisation of the soft layer flips (i.e. a 'blip' is detected) is $\delta_1$, 136.

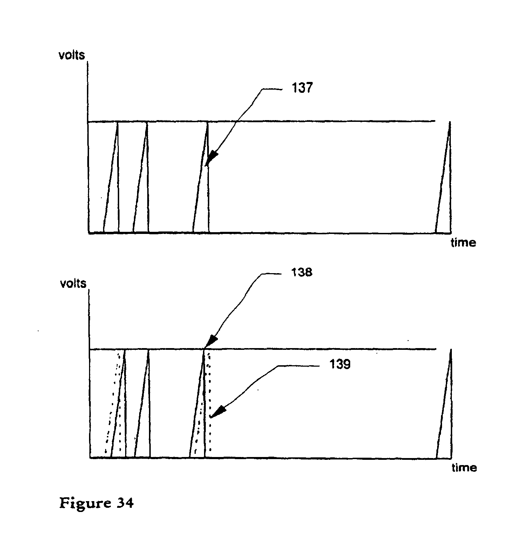

The local field applied to a magnetic element in the tag, 127, is the vector sum of the interrogation field, 24 and the field generated by the permanent magnet. This causes the detected 'blip' orientations to be skewed, so that, in general, the two detected directions for each layer (per full rotation of the interrogating magnetic field) are no longer 180° apart. For each soft magnetic layer in the tag, the deviation from 180° will generally be different, because each soft layer is at a different angle to the hard magnetic material bias layer. Figure 34 illustrates the effect. Without a programmable bias field the 'blip', 137, is one of three magnetic elements in the tag, 126. Applying a programmable direction bias field, the 'blip' moves to a new position, 138, a small distance from the original position, 139.

Referring to figure 33, there is a static bias field of magnitude $B_b$, and a rotating interrogation field of magnitude $B_r$. The magnetisation of the magnetic element layer, 127, produces a 'blip' when the vector sum of these two fields is orthogonal to the material alignment direction 131. In figure 33, this is labelled A and a 'blip' is produced when the resultant summed field is parallel to F. $\theta$ is the angle between the bias field and the orthogonal to the material alignment direction (F), and $\delta_1$ is the angle between the orthogonal to the material alignment (F) and the angle of the radial vector field $B_r$. This is actually half of the 180° deviation referred to above. Using the sine rule,

$$\frac{B_r}{\sin\theta} = \frac{B_b}{\sin\delta_1}$$

Hence,

$$\sin\delta_1 = \frac{B_b}{B_r}\sin\theta$$

A magnetic data tag will have at least two layers of material. Applying the same analysis to a second layer at an angle $\phi$ to the first gives

$$\sin\delta_2 = \frac{B_b}{B_r}\sin(\theta + \phi)$$

Re-arranging and solving for $\theta$

$$\theta = \cot^{-1}\left[\frac{\frac{\sin\delta_2}{\sin\delta_1} - \cos\phi}{\sin\phi}\right]$$

If $\delta_1$ and $\delta_2$ are small, this may be approximated by:

$$\theta = \cot^{-1}\left[\frac{\frac{\delta_2}{\delta_1} - \cos\phi}{\sin\phi}\right]$$

By measuring the deviations from 180° ($2\delta$) at which the tag produces 'blips', for two tag elements (127 and 128) at a (measured) angular separation of $\phi$, the angle of the bias field relative to a fixed datum (such as the first element) may be determined. There is a 180° ambiguity associated with this angle. Note that, in order to achieve a full 180° of coverage, the elements (127 and 128) should be swapped in the above analysis when $\delta_1 < \delta_2$.

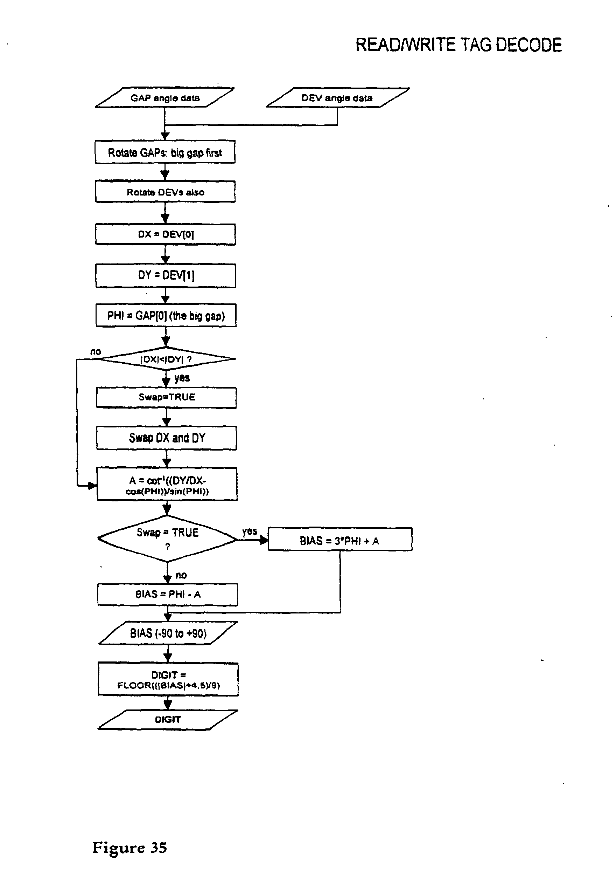

Figure 35 is a flow chart for the decode algorithm implemented in the single-sided reader embodiment to decode the programmable data tag and shows how an extra decimal digit may be decoded from the orientation of a programmable magnetic layer.

The datum for the magnetic hard layer direction is taken as the midpoint of the largest angle $\phi_1$ (the 'big gap') between any two elements on the tag. In this embodiment, the two tag elements used for the analysis are the elements defining this 'big gap'. A further ambiguity of 90° is introduced because, in the existing underlying coding scheme for the two-digit tag, it is not possible to determine which way up (heads or tails) the tag is. The extra programmable decimal digit (0-9) is encoded by subdividing the 90° into ten 9° wide bins.

The embodiment above shows a simple analysis that can be implemented in integer arithmetic on an 8 bit embedded processor. A more complex analysis might consider all possible pairs of angles between elements, and take a suitably weighted average to determine θ. This is an inelegant solution, but might again be suitable for a simple embedded processor.

A small modification to the underlying coding scheme, in which codes that are symmetric about the 'big gap' are forbidden, restores the full 180° range of possible angles. This either doubles the number of codes, or allows wider bins (18°) for the same number of codes.

A more powerful processor can carry out a more complex analysis. The most appropriate analysis to carry out is to determine the 2D vector of the bias field, $B_b$, using a minimisation process. For each soft magnetic element, there are two values of the rotating vector $B_r$ at which the magnetisation flips. When $B_b$ is added onto each value of $B_r$, the resulting two vectors should be at exactly 180° to each other. If the deviation from 180° for the $i^{th}$ element is $\alpha_i$, and there are $N$ tag elements then the best value of $B_r$, is when

$$\sum_{i=1}^{N} [\alpha_i]^2 \ .$$

is minimised. A standard multi-variate minimisation algorithm such as Powell's method may be used to determine the components of the vector $B_b$ (see Numerical Recipes in C 2nd edition, Cambridge University Press, Section 10.5).

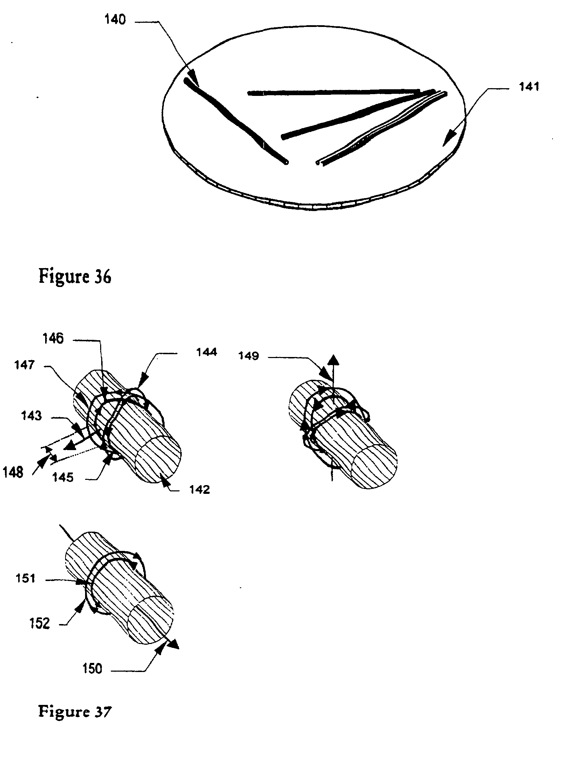

Modifications to the programmable tag structure are possible. Figure 36 illustrates a further possible arrangement of a programmable tag. Four identical soft magnetic elements, 140, are placed on a hard-magnetic layer, 141. The magnetic element, 140, is a 20mm length of Vitrovac 6025 material available from Vacuumschmelze, Germany. This is a magnetic element 25μm thick and 0.75mm wide. The elements, 140, are disposed to lie at defined orientations defined by the tag coding scheme (tag code 77 is illustrated and the angles are shown in figure 19). Layer 141 comprises a hard magnetic layer 23mm diameter of Cro-Vac 45μm thick, available from Vacuumschmelze, Germany. Further arrangements of the tag using alternative magnetic element material or physical arrangements include the use of magnetic elements defined in US-A-5,083,112.

**3-D Reader Embodiment**

i The reader embodiments described above can read a tag lying parallel to one plane (x-y). A 3-D reader embodiment is now described that allows a randomly orientated tag to be read in the interrogation volume. The embodiment is an improvement on the 2-D Aperture reader described above, adding a third orthogonal transmit coil and a third orthogonal receiver coil. The transmit interrogation magnetic field vector rotates around a normal axis. This axis is scanned over the available orientation space. The receive signals are processed to find the orientation at which the transmit interrogation field has been closest to the plane of the tag, and the 'blips' recorded are decoded into data.

A description of the coils used in the embodiment follows, firstly describing the receive coil configuration and then the transmit coil configuration.

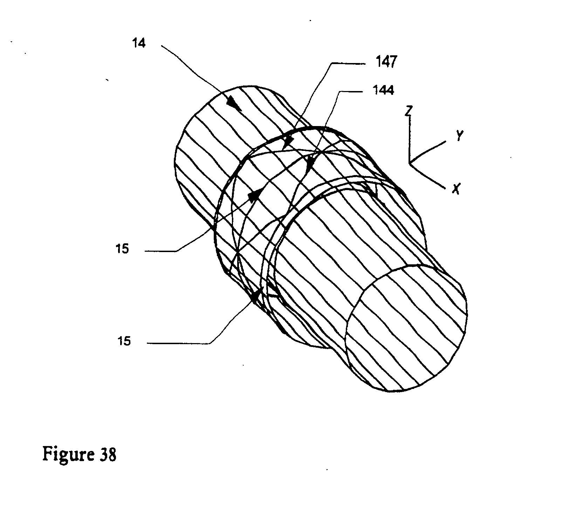

Figures 37 and 38 illustrate the receiver coil arrangement. The receiver coils are constructed on a cylindrical former, 142, of diameter 200 mm and length 400mm. Figure 37 illustrates the three sets of orthogonal coils used to couple with the tag magnetic elements within the interrogation zone. For the y-direction, 143, the receiver coil set comprises 4 coils, 144, 145, 146 and 147. Inner coils 145 and 146 lie on the former, 142, and they extend 120mm along the x-direction as illustrated by dimension 148. Both inner coils comprise 100 turns 0.4mm ecw. The outer coils 144 and 147 comprise 58 turns of 0.4mm ecw and are wound on a second coaxial former (not shown) 260mm in diameter. The coils extend 156mm along the x-direction. The four coils are connected in series in the electrical sense illustrated and 'balanced' by small mechanical re-alignments to achieve zero sensitivity to a uniform magnetic field. A second receiver coil set as illustrated is sensitive to tag generated field in the z-direction, 149. This coil set is identical to the coils 144, 145, 146 and 147, rotated through 90° as shown. The third coil set sensitive to tag generated field in x-direction, 150, comprises two solenoid coils, 151 and 152. The inner coil 151 comprises 100 turns 0.4mm ecw wound on former, 142, and is 120mm long. The outer coil 152 comprises 58 turns of 0.4mm ecw wound on the second 260mm diameter coaxial former and is 156mm long. Figure 38 illustrates all the coils wound on the inner former, 142, and the outer former, 153.

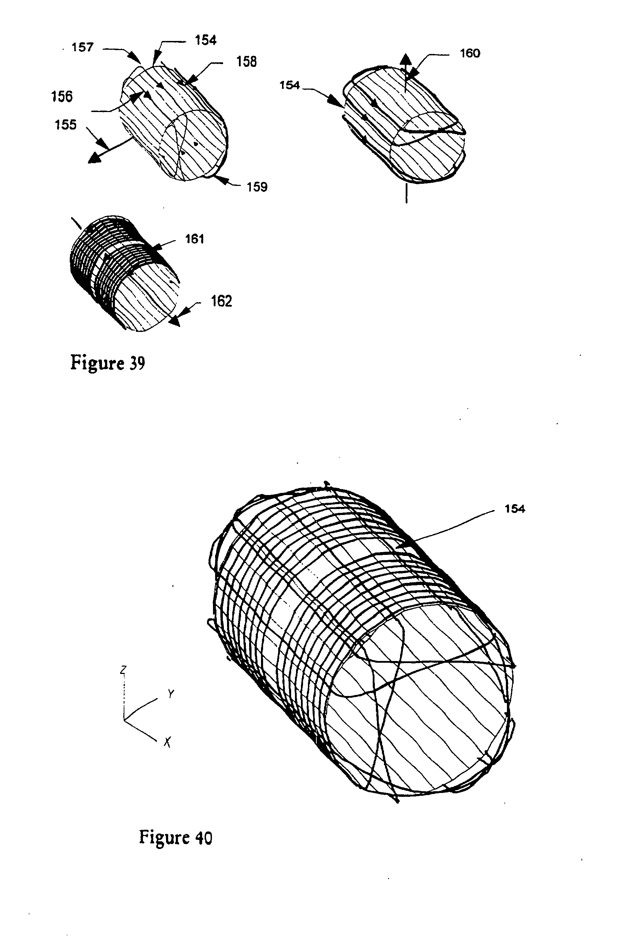

Figure 39 illustrates the three orthogonal transmit coils configuration. The coils are wound on a cylindrical former, 154, 370mm long and 300mm diameter. A uniform magnetic field in the y-direction, 155, is produced by four coils, 156, 157, 158 and 159. Coils 156 and 158 comprise a 'modified Helmholz' arrangement similar to coils 15 and 16. Coils 157 and 159 comprise a second modified 'Helmholz' arrangement, with a magnetic axis 25° offset from coils 157 and 159. The two 'modified Helmholz' coil sets have magnetic axes 12.5° either side of the y-direction, 155. Coil 156 comprises 50 turns 1.4mm ecw and extends 370mm in length along the former. Where coil 156 connects across the open end of the former 154, the coil is a flattened half circle with the total coil aperture width of 570mm. The two edges of coil 156 that lie along the solenoid (x-direction) subtend 120° at the axial centre of the former. Coils 157, 158 and 159 are identical in size and form. Their orientation around the former, 154, is described above. The four coils are connected in series in the sense illustrated. A second transmit coil set generates uniform field in the z-direction, 160. This set comprises four identical coils orientated in an orthogonal direction as illustrated. The final transmitter coil consists of a long solenoid coil, 162, comprising 260 turns of 1.4mm ecw on the coil former, 136. This generates uniform field in the x-direction, 162.

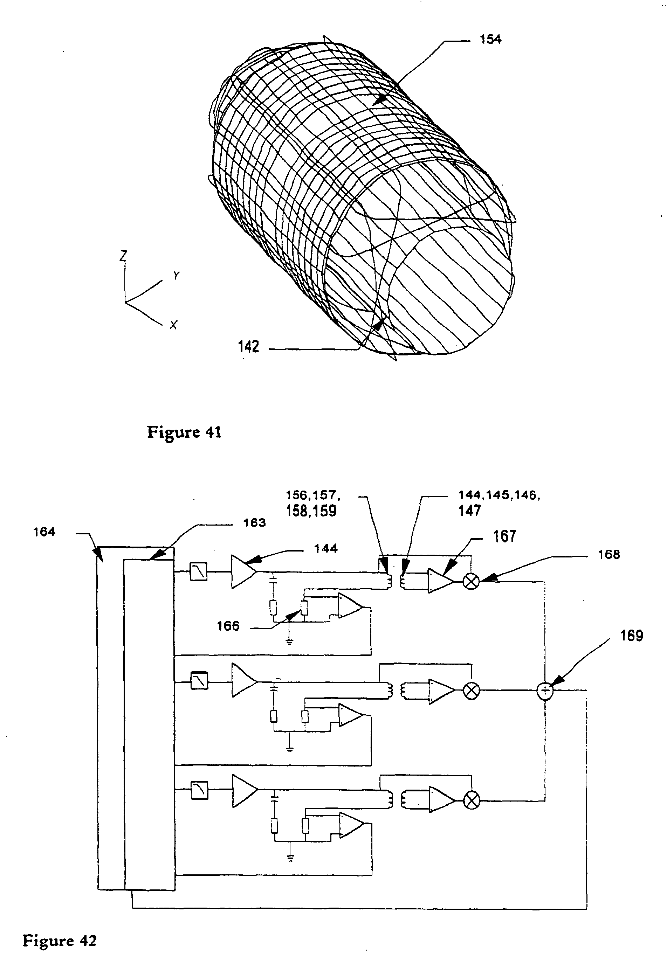

Figure 40 shows the transmit coil arrangement consisting of nine coils generating uniform field in three orthogonal directions. Figure 41 illustrates the 3-D Reader antenna embodiment. The transmit coils on former 154 are located co-axially with receiver coil tube, 142. The interrogation volume, 6, is defined by a further 190mm ID co-axial tube (not shown) that is used to define a mechanical constraint on possible tag positioning in the antenna. The longitudinal region of highest sensitivity is less than 10cm long and tags can be accurately read when separated by 10cm or more along the axis of the reader tube.

Figure 42 illustrates the block diagram for this 3-D Reader embodiment. A Meilhaus ME3000 PCI-bus data acquisition card, 163, provides a multi-channel 16 bit resolution ADC / DAC facility. The card is mounted into a industry standard IBM compatible PC, 164, running Windows 95. The ADC/DAC card, 163, under software control generates three transmit excitation voltages. These are amplified by three 1kW single channel audio amplifiers, 165 and drive the three orthogonal transmit coils with resonating capacitors as shown. The drive currents required are 3A rms to generate the required 2.5kA/m interrogation field. The transmitter currents are monitored by current sense resistors, 166, and digitised at a 100kHz sample rate. Signals detected from the tag by the receive coils are amplified by receive circuits 167, that are similar to those shown in figure 13. The received signal is multiplied by a signal weighting function in analogue multiplier, 168. The three receiver channels are combined and differentiated in an analogue adder, 169 and are digitised by the ADC card 163 at a rate of 100kHz.

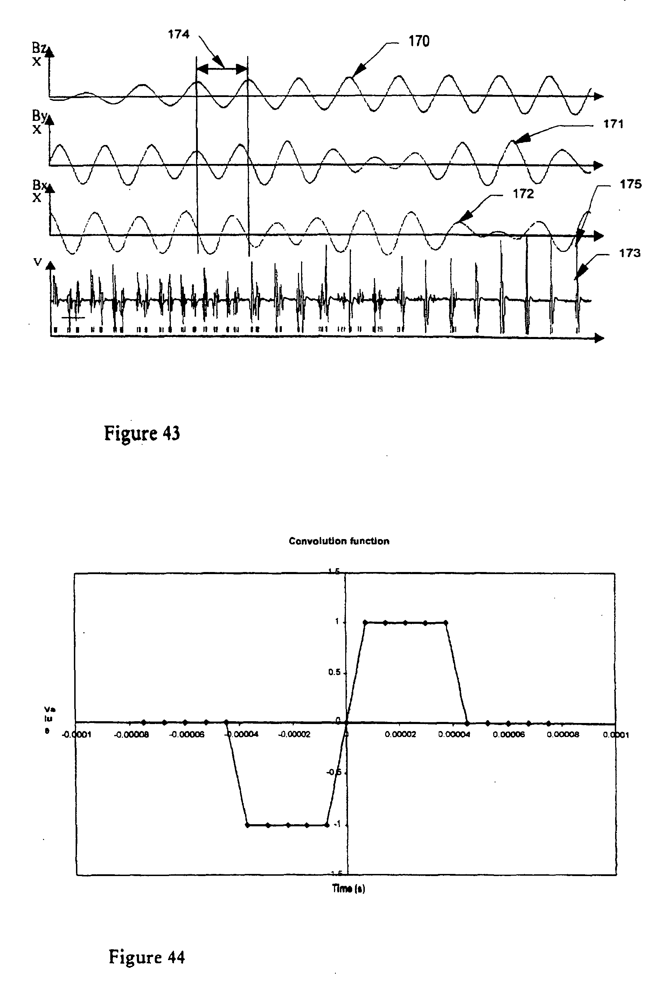

Figure 43 shows the three transmit current waveforms, 170, 171 and 172, measured by the ADC. The detected tag response, 173, is also shown for a 7-layer 4-digit tag. The time resolution does not allow all 'blips' to be resolved in figure 43. The transmit interrogation field completes one revolution in the time 174. When the interrogation field 'scan' is close to the tag plane, then 14 'blips' should be present.

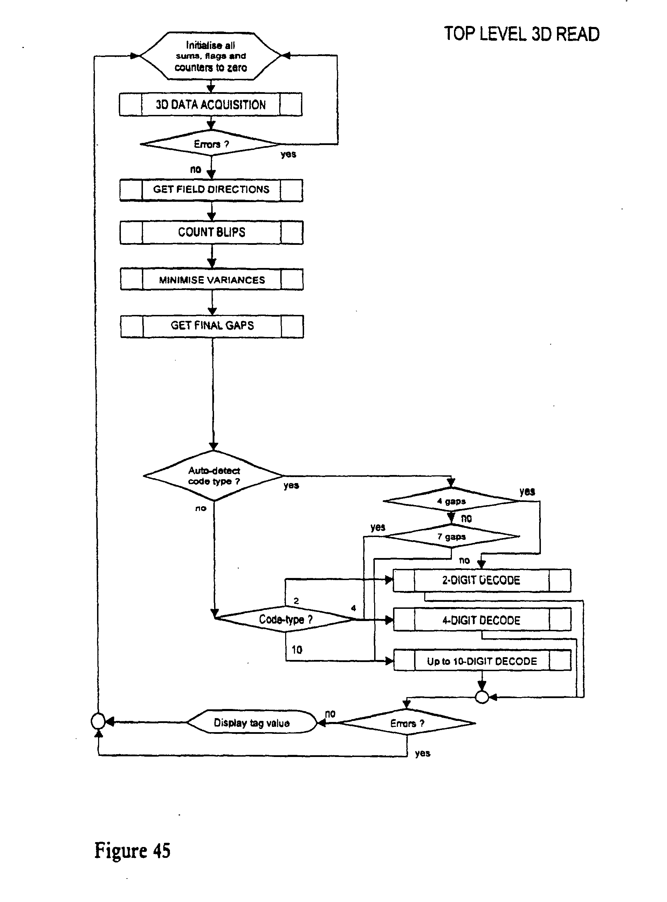

The signal processing is now described with reference to the flow chart descriptions of the processing algorithms described in figures 45, 46, 47, 48 and 49.

When the orientation (plane) of the tag is unknown, a number of interrogation scans at different orientations can be carried out, until one is close to the plane of the tag. A scan is defined as one complete revolution of the transmit field vector in one plane. The 2D decoding algorithms described above can then be applied to the detected signals to determine the tag data value. The analogue signal output of adder, 169, when the scan plane matches the tag plane, is the same as the 2D scan signal shown in Figure 24.

A continuous scan is used in this embodiment. This is based on a nominal 130 Hz rotating field, whose normal vector is arranged to trace out a spiral over the surface of a hemisphere, at constant angular velocity (referred to below as a spiral scan). Over a single 7.7ms 'scan period', this is similar to a scan in a single plane. The equations for the components of the 'transmitted' B interrogation field are given by

$$B_x = (\cos^2(\phi) * \cos(\theta) + \sin^2(\phi)) * \cos(\omega t)$$
$$+ (\sin(\phi) * \cos(\phi) * \cos(\theta) - \cos(\phi) * \sin(\phi)) * \sin(\omega t)$$

$$B_y = (\cos(\phi) * \sin(\phi) * \cos(\theta) - \sin(\phi) * \cos(\phi)) * \cos(\omega t)$$
$$+ (\sin^2(\phi) * \cos(\theta) + \cos^2(\phi)) * \sin(\omega t)$$

$$B_z = (-\cos(\phi)) * \sin(\theta) * \cos(\omega t) - \sin(\theta) * \sin(\phi) * \sin(\omega t)$$

where $t$ is the time, $\omega$ is the angular frequency of the 140Hz scan, $\phi$ = (constant)* $\theta$, and $\theta = \cos^{-1}(1 - t/T)$. $T$ is the total time for one complete interrogation.

Figure 43 shows the three orthogonal field components, 170, 171, 172, and the composite tag signal, 173 from a spiral scan covering half a hemisphere on the same tag scanned in Figure 24. There are clearly a large number of separate peaks, which are not all resolved clearly in this figure.

Figure 45 shows the top-level view of the preferred embodiment of the signal processing for the 3D-reader embodiment. In general the algorithm is similar to the single-sided reader algorithm, but requires many more steps to reach the point where 'gaps' between tag magnetic elements can be determined. From this point, the tag-decoding algorithms in figure 29, 30 and 31 are used.

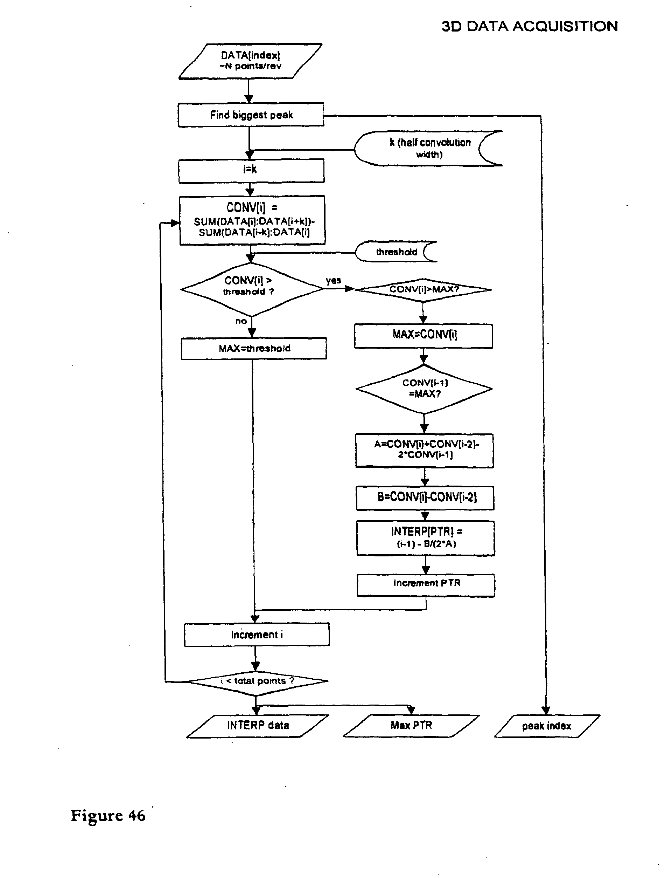

The first step in all the decoding schemes in this embodiment is to determine accurately the time-indices of the 'blips'. This is shown in figure 46. In an ideal case, all the 'blips' will be the same size and shape. The zero-crossing point in the centre of each 'blip' is the point where the applied field has no net component along the material alignment direction of the magnetic element. The detection algorithm should determine this time.

To find the zero-crossing points, the digitised signal is convolved with a rectangular function, as shown in figure 44. The convolution reference signal is symmetric, with equal positive and negative sensitivity about t=0, and a total width of about 80 μs. In figure 46, the convolution algorithm results in array CONV[i].

The zero-crossing points of the 'blips' in the original waveform are extracted from the convolved waveform by looking for peaks above a given threshold. The position of the peak can be used to time gate the original zero-crossing data, allowing the exact zero-crossing time to be interpolated from the original sampled data. Alternatively, a more exact time may be extracted by using quadratic interpolation around the peak of the convolved data (as illustrated in the flow diagram in figure 46). These interpolated positions are saved in the array INTERP[].

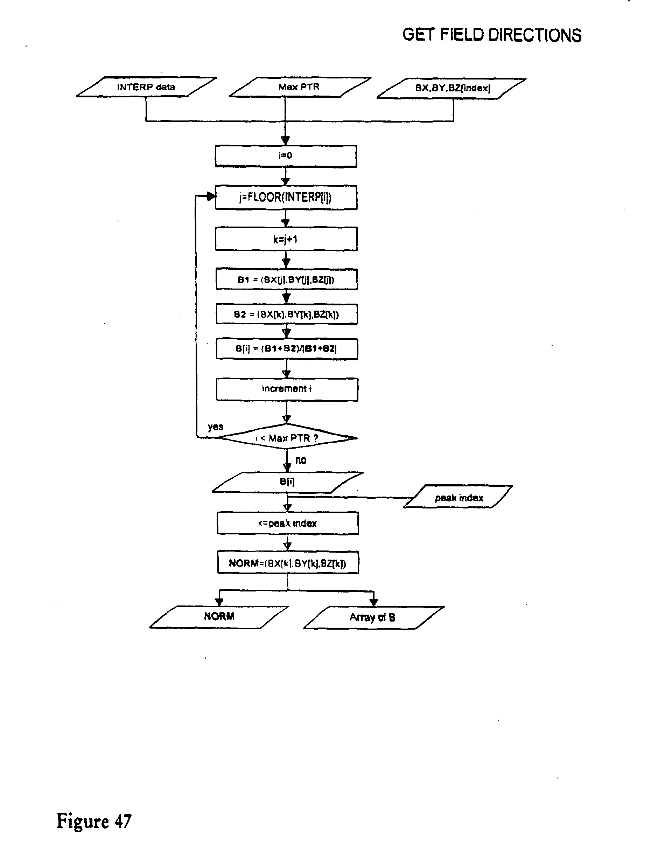

The second step in the decoding process is to calculate the interrogation field vectors at every point where a 'blip' is detected from the sampled signal across resistors, 166. The flow diagram for this is shown in figure 47. This gives an array of B[ ] vectors corresponding to the INTERP time indices. Few or none of the detected 'blips' result from an interrogation field vector moving in the plane of the tag, but each 'blip' detection angle is projected down on to the plane of the tag using an estimated normal vector produced by a tag orientation plane detection algorithm.

The tag orientation plane detection algorithm starts with an initial value for this plane. This value is obtained by detecting the largest amplitude 'blip' seen over many scans. The largest 'blip' results when the interrogation field vector is orthogonal to all the tag magnetic elements simultaneously. This can be seen in figure 42 at point 175. In figure 47, this initial value is shown denoted by the vector NORM.

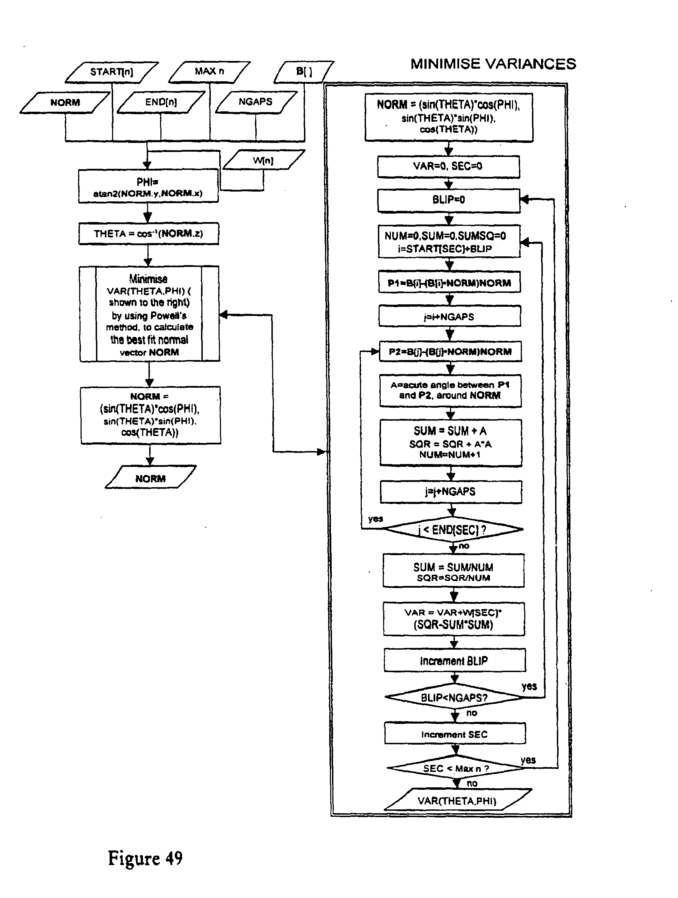

If the normal vector is correct, then every 'blip' for a given tag element should project onto the same line. If it is incorrect, then the projected 'blips will not line up. A standard numerical minimisation routine (Powell's method) is used to find the tag normal vector. Detected 'blip' orientations are associated with specific magnetic elements in the tag that produced this response. The measured orientation of the 'blip' is projected onto the tag plane using the normal estimate. For each tag element the sum of the variances of detected projected positions is minimised (i.e. for each element, the positions projected onto the tag plane line up as closely as possible). An implementation of this is shown in figure 49. This results in an accurate estimate of the tag plane orientation.

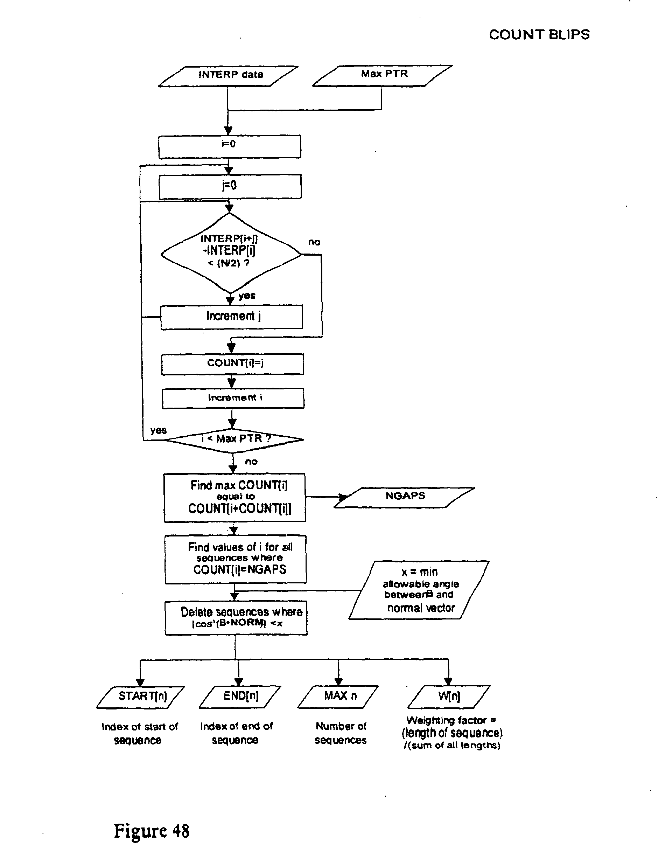

One part of the algorithm described above is to determine which 'blips' correspond to the same tag element. Using the spiral scan waveforms described above, when the normal to the scan is within about 30° of the tag normal, each tag element produces a distinct, 'blip'. The algorithm looks for complete scans (360° field rotations) that contain the correct number of elements for the tag type (so for a n-layer tag, there will be 2n 'blips' in one 'scan'). These will look similar to the signals in figure 24, which shows a 7-layer tag. Where successive scans are found, they are 'concatenated'. Over a continuous time series of 360° 'scans', the 0, $n^{th}$, $2n^{th}$, $3n^{th}$ etc. 'blips' will all correspond to the same element. Similarly, the blips at 1, n+1, 2n+ 1 will correspond to the next element, and so on. Figure 48 is an implementation of this algorithm. The array of INTERP values is analysed to see for each entry, how many subsequent values fall into a half-rotation (n/2 samples). These are stored in a new array, COUNT. COUNT itself is then analysed to find the maximum value for which two successive 'sections' of N/2 samples have the same COUNT value. The algorithm ensures that this value is the correct number of 'blips' for the tag type (i.e. equal to the number of layers). Finally, all such sections are tabulated in arrays that store the start of the section (START), and end (END). These arrays have (Max n) entries, and their values are used to index the array of measured interrogation field B vectors.

For each 'section' detected having the correct number of 'blips' for the tag being interrogated, the variances of the projected 'blip' positions are summed. These sums are added together, weighted by the length of each section (denoted by the array W, in figure 48). This is the sum that the minimisation algorithm attempts to minimise. In figure 49, VAR is calculated as a function of THETA and PHI, the direction angles of the normal vector, and minimised using Powell's method.

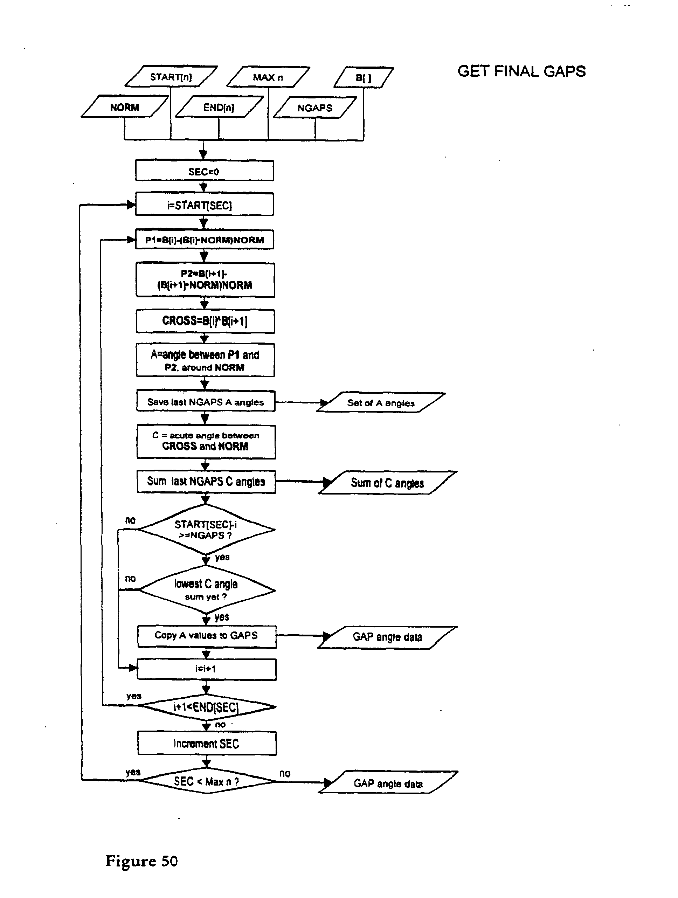

Once the tag orientation is determined, the section of scan that is closest to the plane of the tag is calculated and the 'blip' positions are projected from this section onto the tag plane. The relative angles between the tag elements (gaps) are then resolved, and the tag value determined using algorithms described in figures 29,30 and 31. Figure 50 details the algorithm for this. For each section identified in figure 49, the local normal vector to the scan is calculated by crossing together successive B vectors, to form CROSS. The angle, C, between this and the normal should ideally be zero, and all the data in each section is analysed to see which series of B vectors (NGAPS in a row) gives rise to the smallest average value of this angle. This corresponds to the section of scan closest to the tag plane. The projected angles corresponding to this scan are then saved as the array of GAP values. This can be passed to the standard tag decoding algorithms, illustrated in figures 29, 30 and 31.

It is important to have a good understanding of situations that give rise to problems in the determination of the normal vector, and the subsequent calculation of angular gaps between elements. The algorithms above assume a simple model in which all tag elements are independent. In practice, the fields from each element add to the interrogating field, so that the field at the tag is no longer known exactly. This effect is most significant when the magnitude of the interrogating field in the plane of the tag is small - for example, when the scan is well away from the plane of the tag. This causes the simple geometric model of projected field vectors to fail.

One possible workaround is to discard the data from scans that are well away from the tag plane (this often has overlapping signals anyway). In figure 48, this is achieved by using the initial guess for the normal vector to screen the data. A second consequence is that the variance calculated in the minimisation process will never vanish, even with perfect signal-to-noise ratios and ideally uniform transmit fields. The residual value is a generally a result of this non-ideal tag behaviour. The third consequence is that the tag normal vector may be in error by a few degrees. This is not generally significant, except in the situations where a small angle (of perhaps a few degrees) is calculated by projecting B vectors from non-adjacent blips onto the tag plane. This is easily avoided by choosing the section in figure 50 such that it starts immediately following a big gap (this is not shown in figure 50).

**Further Details**

The system allows low cost labels to be attached to items that are subsequently read with a reader device. The labels or tags are constructed from a magnetic film material that possesses a directional property that is retained when the material is sub-divided into smaller sizes. This size is determined by the material characteristics, the shape of the material and the desired orientation measurement accuracy. The 'Atalante' him material will function to around 2.5mm diameter tags. Thinner coatings of magnetic material will yield smaller tags and improvements to the magnetic material characteristics may improve permeability and cross-field saturation levels. Similarly, alternative materials may allow the tags to function with lower operating field levels. The data content is denned by the relative orientation angles between the magnetic elements comprising the tag. Alternative methods of encoding the data, for instance by amplitude information are possible. The amplitude detected is a function of the magnetic material characteristics, operating field levels, interrogation field rotational rate and material volume.

The material available from IST has excellent uniformity of magnetic alignment direction across the central 70cm width and along the rolls produced. This direction is defined by the magnetic field patterns in the manufacturing process. Material that possesses two material alignment directions in one 1μm sputter coat layer has been observed at the edges of the roll and this offers the opportunity to manufacture tags from fewer layers of stock material. Tags with one magnetic layer possessing a plurality of magnetic orientation axes are also possible.

The data is encoded by the relative direction orientations of magnetic elements on the tag. These elements are detected and differentiated due to a directional material property. Alternative forms of directional magnetic element include long thin amorphous wires or spin melt alloys available from Unitika, Allied or Vacuumschmelze.

The presence of the magnetic element is detected by a rate of change of flux generated by the element as it switches state between positive and negative saturation (and visa-versa) in the presence of a rotating uniform magnetic field. An alternative detection strategy employed in the art is harmonic detection. A second a. c. frequency at a few kHz is applied to the rotating interrogation field vector. When the rotating magnetic field vector is substantially orthogonal to material alignment direction, the additional a.c. field causes the tag magnetisation to be modulated with the applied H-field. The magnetic materials are very non-linear and harmonics are produced. These can be detected by the receiver coils.

The reader devices generate a substantially uniform rotating magnetic field in the interrogation zone that is primarily defined by the receiver coil sensitivity, physical barriers, or devices in the processing algorithms. The field can determine the orientation of one or more magnetic elements within the interrogation volume, measured relative to the orthogonal direction to the transmit field vector. The interrogation field is assumed to rotate at a constant rate and amplitude and in the embodiments described above this is achieved by orthogonal coils generating uniform fields driven by sinusoidal signals. The effect of non-uniform field generation will be distortions in both the amplitude and rate that the transmit vector rotates and this leads to errors in determining the magnetic element orientation. The coding schemes are designed with a budget for practical measurement errors and these are typically less than 1°. The 'gap' coding scheme improves the error tolerance, as the relative orientation errors are important. The errors seen in the interrogation rotational field vector may be analysed as harmonic errors. The first order errors are caused by amplitude variations between the orthogonal field generating means and deviations from orthogonal as the field varies over space. D.c. magnetic external interference also distorts the instantaneous field vector. Multi-element tags provide several measurement points of the actual transmit field vector on the tag. The coding schemes are deterministic and specific orientation features can be incorporated on the tag. Using the available measurement data, the first order transmit field errors can be compensated.

Alternative coil arrangements are possible that reproduce the desired rotating transmit field vector. For example, a three-phase coil arrangement with three modified Helmholz' coil pairs spaced at 120° will generate a rotating field vector. This maybe extended to multiphase arrangements common in motor systems. Figure 6 shows a field model for two coils with a magnetic screen. The screen is constructed from thin transformer steel wrapped around the assembly to a thickness of 2mm. The coil geometry is optimised to produce a uniform magnetic field. Other arrangements of coils generating substantially uniform fields are known in the art. It is also possible to synthesise uniform fields from a combination of coils electronically using either analogue or digital processing.

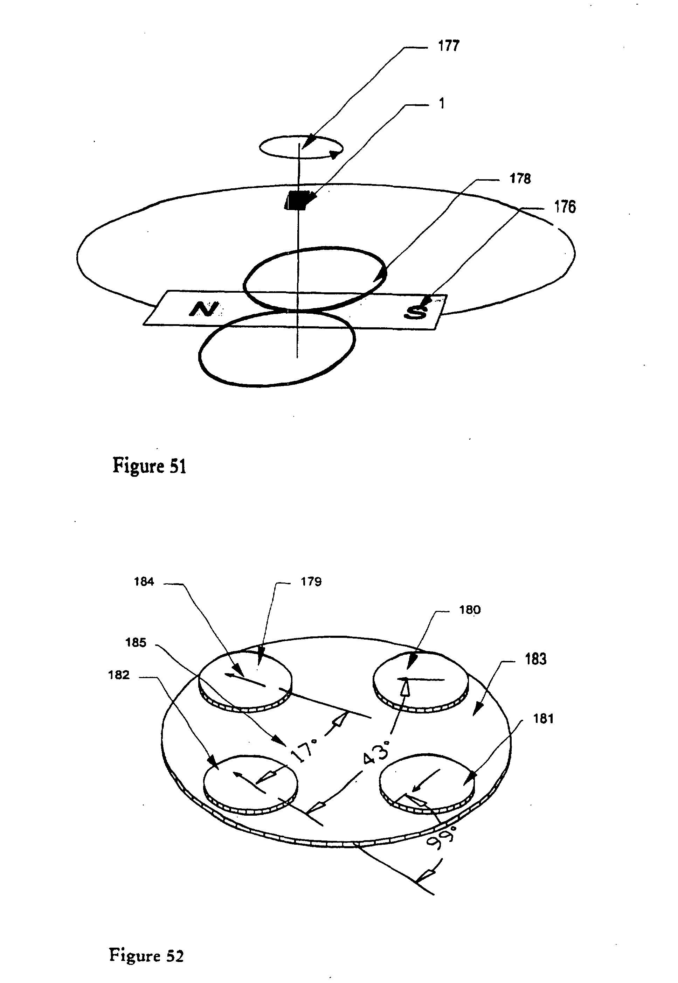

Rotating magnetic fields can be produced by physically spinning a permanent magnet. Figure 51 shows one embodiment. A permanent magnet, 176, spins at constant angular rate, 177. An orthogonal 'figure of eight' receiver coil, 178, detects the magnetic response from the tag, 1.

The receiver coil set function is to provide sensitivity to the flux produced by the magnetic element when interrogated by the transmit field vector. The receiver coil set is sensitive to the tag magnetic elements in any orientation that the elements can be expected. Ideally, the detected amplitude is insensitive to the element orientation. The receiver coils also detect magnetic field from the transmit vector and external sources. Many techniques known in the art to reduce the induced signals from these sources may be used. The coils are 'balanced' with respect to external 'far-field' interference. This is usually achieved by physical arrangement of the coils to form quadrapoles and variants. Alternatively, this function can be accomplished electronically or with signal processing. Rejection of the transmit field is similarly achieved. Like the transmit coils there is no requirement for the coils to be arranged in orthogonal directions. The coils can be positioned in any position and combined appropriately. More than three orthogonal receiver coils could be used. For instance, many figure of eight receiver coils could surround the 3-D aperture reader on the surface of the aperture.

The receiver coils provide sensitivity to magnetic field. Similar sensors include Hall-effect devices, SQUIDs, magnetoresistors and similar devices well known in the art.

Whilst mechanical arrangements of transmit and receive coils around the three axes provide orthogonality in 3-D space and transmit-to-receive isolation, other techniques exist to provide the same feature. Many of these use signal processing to simulate the effect (using tensor algebra) to mix signals from various non-orthogonal axes and / or to subtract unwanted transmit-to-receive leakage signals.

The transmit coils can be driven by a PWM amplifier (class 'D'), to reduce the size and power dissipation of the drive amplifiers. Such methods are well known in the art, and have been demonstrated on various EAS retail security systems.

The spiral scan described above is essentially a 2D planar scan whose normal vector is allowed to spiral round. A single, planar 2D scan gives no information about the tag orientation. A single *conical* scan can give orientation information. Therefore, a scan strategy may be devised in which a conical scan is rotated around into different directions and this should allow a more robust determination of the tag orientation. The fastest scan will be one in which three orthogonal, conical scans are carried out in succession. However, this may not always decode tags in every orientation, for example, a tag whose normal is at 45° to the three orthogonal scans. This is because the 'blips' from two closely adjacent tags may overlap, rendering them indistinguishable. Other combinations of conical scan may readily be devised to guarantee that one scan plane is always close enough.

The reader systems described above allow the remote detection and orientation measurement of a single or plurality of magnetic elements in the interrogation volume. This feature of the system allows the invention to be used as a rotation sensor. For instance, the relative orientation between two magnetic elements mounted on two independent devices could be measured. Example applications include torque sensing or sensing the state of a small valve.

The relatively low frequencies used by the invention provide a unique benefit of allowing the detection of the tag through a small thickness of conductive material. For instance, tags may by mounted within the top of bottle screw-tops made of metal and read. Similarly the tags may be electron beam welded between 0.5mm thick non-magnetic stainless steel and successfully read.

The method of interrogating the magnetic element is not greatly affected by generation of harmonics of the interrogation field. Therefore, the use of highly non-linear permeable magnetic materials within the antenna structures are possible to reduce weight, size and power consumption of the reader systems.

The reader system detects the orientation of magnetic elements within the interrogation volume. The magnetic elements need not intersect with each other. The tag shown in figure 52 comprises four pieces of IST thin film material 10mm in diameter, 179,180, 181 and 182, placed equally around the circumference of a 3.5cm diameter substrate, 183. The relative orientations of these four layers determines the tag data. The material alignment directions of each layer are denoted by arrows, for example 184. Angles between layers are shown, 185. Layers 179, 180 and 181 are aligned at 17°, 43° and 99° to layer 182, respectively. Hence, the gap between layers 182 and 179 is 17°, between layers 179 and 180 is 26°, and between layers 180 and 181 is 56°. Referring to figure 17, these corresponds to gap states 2, 3 and 5, in the 2-digit coding scheme. By reference to figure 19, this decodes to tag number 77.

This arrangement does not suffer from the effects of magnetic element interaction seen with the vertical layer stacked tags. In a further arrangement at each site (179-182), the single layer film material may be replaced by a 'tag' with two or more layers of material, 10mm in diameter, each layer of material having a different alignment direction. This leads to increased data density. To further increase the data density, a programmable hard magnetic layer is added at each site, using the methods described earlier in this disclosure. Using this arrangement, the programmed direction of the hard magnetic layer at each site may uniquely be determined, using the methods described above for decoding individual programmable magnetic tags. This means that data may be encoded by 'blips' distributed over a full 360°, breaking the 180° symmetry seen in the other data tags described above, approximately doubling the effective data capacity. The film magnetic material may be replaced by alternative directional magnetic structures as described in the prior-art, or by material exhibiting two 'material directions'. The arrangement is not limited to four 'sites', or 'sites' on a circle, and can therefore be extended to arrays of multi-layer tags, both with and without programmable hard magnetic layers. As illustrated by the tag arrangements the 'sites' spacing can be as small as zero and as large as the interrogation volume. The inventor has determined a spacing of around one element diameter is sufficient to reduce interaction errors between 'sites'.

The tags may be used as anti-counterfeit features to mark, for instance, CD's or bank-notes. The labels need not have any coding scheme but have a unique combination of features that maybe detected by the reader.

The tags are extremely robust and survive temperatures in excess of 200°C. The limitation is the PET film stability of the Atalante film. The active magnetic material may be sputter coated onto alternative materials, for instance aluminium. This offers far greater temperature capability.

The ability to read more than one tag at a time in the interrogation volume is a very powerful feature, and is referred to as anti-collision tag reading. The 3D-aperture reader has the capability to achieve effective anti-collision reading by a combination of several techniques, provided that the individual tags are physically separated and/or at different orientations.

The first technique involves passing the multiple tags (or tagged items) through the aperture at a known speed - for example, by using a conveyor. The conveyor is slow enough to allow multiple scans of each tag as the tags pass through. As each tag passes through the sensitive receiver zone, the amplitude of its detected signals will have a characteristic time-dependence (i.e. from zero, up to a maximum, and down to zero again). Tags at different points along the length of conveyor will show characteristic time variations offset in time from one another. Signals from multiple tags may therefore be separated by processing the received data, and grouping together signals which have matching time dependencies consistent with the speed of the conveyor. This provides effective tag separation as a function of distance along the axis of the aperture.

Tags with different orientations that happen to pass through the aperture simultaneously may also be separated. In this case, the number of 'blips' with the same time variation will be too great for them to have arisen from a single tag. The actual number of tags required to generate this number of blips can be estimated. Each tag will have a set of magnetic elements lying in a plane, and can be fully described by a rotation matrix (defined by roll, pitch and yaw), and the angle of each layer relative to the first. Thus, a seven-layer tag could be described by three orientation angles and six in-plane angles.

The responses of a set of such tags in the rotating interrogation field can be predicted, and compared to the measured response. As in the existing scheme, a minimisation algorithm can be used to alter the tag parameters described above to achieve the best match to the measured data. If the minimisation converges, the tags can be decoded and separated. If not, then an error can be flagged, indicating the number of incorrectly-scanned items, and their approximate location.

A model of the tag response that includes the effect of the magnetisation of the elements can be incorporated into the anti-collision algorithm. This will allow more of the scan data to be used, and will lead to more reliable decoding, at the expense of increased processing requirements.

Tags that both pass through the aperture at the same time and have the same orientation may be decoded using modified system geometries, provided they are physically separated, e.g. by being at different radii in the aperture. Receiver coil sets can be constructed with sensitivities that vary as a function of, for example, radius. The amplitudes of signals from two tags at different radii will be different, and can therefore distinguished. Combinations of receiver coils whose sensitivities vary in different directions can be incorporated into the aperture reader. In this case, it is likely that the signals from the receiver coils will not be combined into a single composite before processing, as this will discard some useful information.

In practice, a combination of the anti-collision features discussed above will work in almost all situations, expect in pathological cases, e.g. where two tags are sandwiched together. These situations are likely to be rare. An important feature is that the decoding software will always be able to tell if some items cannot be scanned and the chance of accidentally missing a tagged item is very small. Physical re-arrangement of the items before re-scanning will probably lead to a successful scan

Further information of the tag position can be interrogated by employing field gradients in the interrogation volume. Such systems are disclosed in PCT publication WO 96/31790. This information can be further used to enhance tag anti-collision.

The tags or labels have their data established on manufacture, similar to optical bar codes. They are therefore suited to the retail labelling industry. Marking of postal packets or goods in warehouses, where the tag is made with 'perforations' so that it can be easily subdivided and hence 'cloned' is one application area. Marking of medical consumables such as drugs, assay vials and swabs is also possible.

## Claims

1. A method of interrogating a magnetic data tag (76, 126) which tag comprises a plurality of magnetic layers (44, 46, 48, 49, 62 to 65, 127 to 130), each layer exhibiting a directional response to an applied magnetic field, wherein the relative orientation of the directional responses of the respective layers defines the stored data, comprising generating a rotating magnetic field in an interrogation volume containing the data tag (76, 126), receiving a signal representing the relative orientations of the magnetic layers of the data tag (76, 126) and decoding the signal to decode data encoded on the tag (76, 126).

2. A method according to Claim 1, wherein each layer of the tag (76, 126) generates two responses for every 360 degree rotation of the field, the responses of each layer being separated by an angle of rotation, the deviation of the angle of rotation between two responses from the same layer being determined from the angle of rotation between the responses.

3. A method according to Claim 2, wherein the angle of rotation is 180 degrees.

4. A method according to Claim 2 or 3, further comprising the step of rejecting an output response from the interrogation field if the deviation exceeds a predetermined threshold.

5. Apparatus for reading a magnetic data tag (76, 126), the tag comprising a plurality of magnetic elements (44, 46, 48, 49, 62 to 65, 127 to 130, 140, 179-182), each element exhibiting a directional response to an applied magnetic field, said apparatus comprising:

   means (15-18, 109-110, 156 to 159, 161, 176) for generating a rotating interrogation field to read the tag (76, 126);
   means (21, 22, 26, 27, 116, 117, 120, 121, 144 to 147, 151, 152, 178) for detecting the response of the tag (76, 126) to the interrogation field; and
   means for determining the relative orientations of the magnetic elements of the tag (76, 126).

6. Apparatus according to Claim 5, wherein the generating means comprises a coil arrangement for generating a uniform interrogation field over substantially the whole of the region in which the detecting means can detect the tag response.

7. Apparatus according to Claim 5 or 6, comprising means for generating a uniform interrogation field in three orthogonal directions.

8. Apparatus according to any one of Claims 5 to 7, wherein the interrogation field is substantially at one frequency.

9. Apparatus according to Claim 8, wherein the frequency is less that 1kHz.

10. Apparatus according to Claim 5 wherein said means for generating a rotating interrogation field comprises transmit coils configured as thin, flat solenoids, and
    said means for detecting the response comprises a receive coil arrangement mounted about the thin plane of the solenoids, with substantially zero coupling to the rotating field.

11. Apparatus according to Claim 10, wherein the transmit solenoids are constructed on a permeable core.

12. Apparatus according to Claim 10 or 11, further comprising means for determining the inclination of the tag (76, 126) in relation to the plane that contains the magnetic axes of the solenoids.

13. Apparatus according to Claim 12, wherein the inclination detection means includes means for generating a conical scan field.

## Patentansprüche

1. Verfahren zum Abfragen einer magnetischen Datenmarke (76, 126), wobei die Marke eine Mehrzahl magnetischer Schichten (44, 46, 48, 49, 62 bis 65, 127 bis 130) umfasst und jede Schicht eine Richtungsreaktion auf ein angelegtes Magnetfeld aufweist, wobei die relative Orientierung der Richtungsreaktionen der jeweiligen Schichten die gespeicherten Daten definiert, umfassend Generieren eines magnetischen Drehfelds in einem die Datenmarke (76, 126) enthaltenden Abfragevolumen, Empfangen eines die relativen Orientierungen der magnetischen Schichten auf der Datenmarke (76, 126) repräsentieren Signals und Decodieren des Signals, um auf der Marke (76, 126) codierte Daten zu decodieren.

2. Verfahren nach Anspruch 1, bei dem jede Schicht der Marke (76, 126) zwei Reaktionen für jede 360°-Drehung des Felds generiert, wobei die Reaktionen jeder Schicht durch einen Drehwinkel getrennt sind und die Abweichung des Drehwinkels zwischen zwei Reaktionen von derselben Schicht anhand des Drehwinkels zwischen den Reaktionen bestimmt wird.

3. Verfahren nach Anspruch 2, bei dem der Drehwinkel 180° beträgt.

4. Verfahren nach Anspruch 2 oder 3, weiter umfassend den Schritt des Rückweisens einer Ausgabereaktion aus dem Abfragefeld, wenn die Abweichung eine vorgegebene Schwelle überschreitet.

5. Vorrichtung zum Lesen einer magnetischen Datenmarke (76, 126), wobei die Marke eine Mehrzahl Magnetelemente (44, 46, 48, 49, 62 bis 65, 127 bis 130, 140, 179-182) umfasst und jedes Element eine Richtungsreaktion auf ein angelegtes Magnetfeld aufweist, wobei die Vorrichtung umfasst:

    Mittel (15-18, 109-110, 156 bis 159, 161, 176) zum Generieren eines Abfragedrehfelds zum Lesen der Marke (76, 126);
    Mittel (21, 22, 26, 27, 116, 117, 120, 121, 144 bis 147, 151, 152, 178) zum Erkennen der Reaktion der Marke (76, 126) auf das Abfragefeld; und Mittel zum Bestimmen der relativen Orientierungen der Magnetelemente der Marke (76, 126).

6. Vorrichtung nach Anspruch 5, bei der das Generierungsmittel eine Spulenanordnung zum Generieren eines einheitlichen Abfragefelds über im Wesentlichen der gesamten Region, in der das Erkennungsmittel die Markenreaktion erkennen kann, aufweist.

7. Vorrichtung nach Anspruch 5 oder 6 mit einem Mittel zum Generieren eines einheitlichen Abfragefelds in drei orthogonalen Richtungen.

8. Vorrichtung nach einem der Ansprüche 5 bis 7, bei der das Abfragefeld im Wesentlichen bei einer Frequenz ist.

9. Vorrichtung nach Anspruch 8, bei der die Frequenz weniger als 1 kHz beträgt.

10. Vorrichtung nach Anspruch 5, bei der das Mittel zum Generieren eines Abfragedrehfelds als dünne, flache Magnetspulen konfigurierte Sendespulen umfasst, und
    das Mittel zum Erkennen der Reaktion eine um die dünne Ebene der Magnetspulen angebrachte Empfangsspulenanordnung mit im Wesentlichen Nullkopplung zum Drehfeld umfasst.

11. Vorrichtung nach Anspruch 10, bei der die Sendemagnetspulen auf einem permeablen Kern aufgebaut sind.

12. Vorrichtung nach Anspruch 10 oder 11, weiter umfassend ein Mittel zum Bestimmen der Neigung der Marke (76, 126) in Bezug auf die die magnetischen Achsen der Magnetspulen enthaltende Ebene.

13. Vorrichtung nach Anspruch 12, bei der das Neigungserkennungsmittel ein Mittel zum Generieren eines konischen Abtastfelds aufweist.

## Revendications

1. Procédé d'interrogation d'une étiquette de données magnétique (76, 126) laquelle étiquette comporte une pluralité de couches magnétiques (44, 46, 48, 49, 62 à 65, 127 à 130), chaque couche produisant une réponse directionnelle à un champ magnétique appliqué, dans lequel l'orientation relative des réponses directionnelles des couches respectives définit les données mémorisées, comportant la génération d'un champ magnétique rotatif dans un volume d'interrogation contenant l'étiquette de données (76, 126), la réception d'un signal représentant les orientations relatives des couches magnétiques de l'étiquette de données (76, 126) et le décodage du signal afin de décoder des données codées sur l'étiquette (76, 126).

2. Procédé selon la revendication 1, dans lequel chaque couche de l'étiquette (76, 126) génère deux réponses à chaque rotation de 360 degrés du champ, les réponses de chaque couche étant séparées par un angle de rotation, l'écart de l'angle de rotation entre deux réponses provenant de la même couche étant déterminé par rapport à l'angle de rotation entre les réponses.

3. Procédé selon la revendication 2, dans lequel l'angle de rotation est de 180 degrés.

4. Procédé selon la revendication 2 ou 3, comportant en outre l'étape consistant à rejeter une réponse de sortie provenant du champ d'interrogation si l'écart dépasse un seuil prédéterminé.

5. Dispositif destiné à lire une étiquette de données magnétique (76, 126), l'étiquette comportant une pluralité d'éléments magnétiques (44, 46, 48, 49, 62 à 65, 127 à 130, 140, 179 à 182), chaque élément produisant une réponse directionnelle à un champ magnétique appliqué, ledit dispositif comportant :

    des moyens (15-18, 109-110, 156 à 159, 161, 176) destinés à générer un champ d'interrogation rotatif afin de lire l'étiquette (76, 126),
    des moyens (21, 22, 26, 27, 116, 117, 120, 121, 144 à 147, 151, 152, 178) destinés à détecter la réponse de l'étiquette (76, 126) au champ d'interrogation, et

des moyens pour déterminer les orientations relatives des éléments magnétiques de l'étiquette (76, 126).

6. Dispositif selon la revendication 5, dans lequel les moyens de génération comportent un équipement de bobine pour générer un champ d'interrogation uniforme sensiblement sur la totalité de la région dans laquelle les moyens de détection peuvent détecter la réponse d'étiquette.

7. Dispositif selon la revendication 5 ou 6, comportant des moyens destinés à générer un champ d'interrogation uniforme dans trois directions orthogonales.

8. Dispositif selon l'une quelconque des revendications 5 à 7, dans lequel le champ d'interrogation est sensiblement à une fréquence.

9. Dispositif selon la revendication 8, dans lequel la fréquence est inférieure à 1 kHz.

10. Dispositif selon la revendication 5, dans lequel lesdits moyens destinés à générer un champ d'interrogation rotatif comportent des bobines d'émission configurées en tant que solénoïdes minces, plats, et

lesdits moyens destinés à détecter la réponse comportent un équipement de bobine de réception monté autour du plan mince des solénoïdes, ayant sensiblement un couplage égal à zéro dans le champ rotatif.

11. Dispositif selon la revendication 10, dans lequel les solénoïdes d'émission sont construits sur un noyau perméable.

12. Dispositif selon la revendication 10 ou 11, comportant en outre des moyens destinés à déterminer l'inclinaison de l'étiquette (76, 126) en relation au plan qui contient les axes magnétiques des solénoïdes.

13. Dispositif selon la revendication 12, dans lequel les moyens de détection d'inclinaison incluent des moyens destinés à générer un champ à balayage conique.

EP 1 048 006 B1

# FIGURES

Figure 1

Figure 2

21

Figure 3

Figure 4

Figure 5

Figure 6

Figure 7

Figure 8

Figure 9

Figure 10

08Jan1998 16:41

**Figure 11**

**Figure 12**

**Figure 13**

**Figure 14**

Figure 15

Figure 16

| Digit | Reader Min | Minimum | Nominal | Maximum | Reader Max |
|-------|-----------|---------|---------|---------|-----------|
| 0 | 3.38 | 3.92 | 4.5 | 5.08 | 5.69 |
| 1 | 8.35 | 9.2 | 10 | 10.8 | 11.75 |
| 2 | 14.67 | 15.92 | 17 | 18.08 | 19.46 |
| 3 | 22.78 | 24.56 | 26 | 27.44 | 29.39 |
| 4 | 34.52 | 37.04 | 39 | 40.96 | 43.72 |
| 5 | 49.86 | 53.36 | 56 | 58.64 | 62.46 |
| 6 | 67 | 71.6 | 75 | | |

Figure 17

100-code Tag Manufacturing Information                             MCE      26/07/98
**ABSOLUTE ANGLES**                                                         Issue #2

| Tag No | Angle #1 | Angle #2 | Angle #3 | Base 6 (Fwd) | Base 6 (Rev) | Length | Big Gap |
|---|---|---|---|---|---|---|---|
| 0 | 4.5 | 9 | 13.5 | 000 | 000 | 13.5 | 166.5 |
| 1 | 4.5 | 9 | 19 | 001 | 100 | 19 | 161 |
| 2 | 4.5 | 9 | 26 | 002 | 200 | 26 | 154 |
| 3 | 4.5 | 9 | 35 | 003 | 300 | 35 | 145 |
| 4 | 4.5 | 9 | 48 | 004 | 400 | 48 | 132 |
| 5 | 4.5 | 9 | 65 | 005 | 500 | 65 | 115 |
| 6 | 4.5 | 14.5 | 19 | 010 | 010 | 19 | 161 |
| 7 | 4.5 | 14.5 | 24.5 | 011 | 110 | 24.5 | 155.5 |
| 8 | 4.5 | 14.5 | 31.5 | 012 | 210 | 31.5 | 148.5 |
| 9 | 4.5 | 14.5 | 40.5 | 013 | 310 | 40.5 | 139.5 |
| 10 | 4.5 | 14.5 | 53.5 | 014 | 410 | 53.5 | 126.5 |
| 11 | 4.5 | 14.5 | 70.5 | 015 | 510 | 70.5 | 109.5 |
| 12 | 4.5 | 21.5 | 26 | 020 | 020 | 26 | 154 |
| 13 | 4.5 | 21.5 | 31.5 | 021 | 120 | 31.5 | 148.5 |
| 14 | 4.5 | 21.5 | 38.5 | 022 | 220 | 38.5 | 141.5 |
| 15 | 4.5 | 21.5 | 47.5 | 023 | 320 | 47.5 | 132.5 |
| 16 | 4.5 | 21.5 | 60.5 | 024 | 420 | 60.5 | 119.5 |
| 17 | 4.5 | 21.5 | 77.5 | 025 | 520 | 77.5 | 102.5 |
| 18 | 4.5 | 30.5 | 35 | 030 | 030 | 35 | 145 |
| 19 | 4.5 | 30.5 | 40.5 | 031 | 130 | 40.5 | 139.5 |
| 20 | 4.5 | 30.5 | 47.5 | 032 | 230 | 47.5 | 132.5 |
| 21 | 4.5 | 30.5 | 56.5 | 033 | 330 | 56.5 | 123.5 |
| 22 | 4.5 | 30.5 | 69.5 | 034 | 430 | 69.5 | 110.5 |
| 23 | 4.5 | 30.5 | 86.5 | 035 | 530 | 86.5 | 93.5 |
| 24 | 4.5 | 43.5 | 48 | 040 | 040 | 48 | 132 |
| 25 | 4.5 | 43.5 | 53.5 | 041 | 140 | 53.5 | 126.5 |
| 26 | 4.5 | 43.5 | 60.5 | 042 | 240 | 60.5 | 119.5 |
| 27 | 4.5 | 43.5 | 69.5 | 043 | 340 | 69.5 | 110.5 |
| 28 | 4.5 | 43.5 | 82.5 | 044 | 440 | 82.5 | 97.5 |
| 29 | 4.5 | 43.5 | 99.5 | 045 | 540 | 99.5 | 80.5 |
| 30 | 4.5 | 60.5 | 65 | 050 | 050 | 65 | 115 |
| 31 | 4.5 | 60.5 | 70.5 | 051 | 150 | 70.5 | 109.5 |
| 32 | 4.5 | 60.5 | 77.5 | 052 | 250 | 77.5 | 102.5 |
| 33 | 4.5 | 60.5 | 86.5 | 053 | 350 | 86.5 | 93.5 |
| 34 | 4.5 | 60.5 | 99.5 | 054 | 450 | 99.5 | 80.5 |
| 35 | 10 | 14.5 | 24.5 | 101 | 101 | 24.5 | 155.5 |
| 36 | 10 | 14.5 | 31.5 | 102 | 201 | 31.5 | 148.5 |
| 37 | 10 | 14.5 | 40.5 | 103 | 301 | 40.5 | 139.5 |
| 38 | 10 | 14.5 | 53.5 | 104 | 401 | 53.5 | 126.5 |
| 39 | 10 | 14.5 | 70.5 | 105 | 501 | 70.5 | 109.5 |
| 40 | 10 | 20 | 30 | 111 | 111 | 30 | 150 |
| 41 | 10 | 20 | 37 | 112 | 211 | 37 | 143 |
| 42 | 10 | 20 | 46 | 113 | 311 | 46 | 134 |
| 43 | 10 | 20 | 59 | 114 | 411 | 59 | 121 |
| 44 | 10 | 20 | 76 | 115 | 511 | 76 | 104 |
| 45 | 10 | 27 | 37 | 121 | 121 | 37 | 143 |
| 46 | 10 | 27 | 44 | 122 | 221 | 44 | 136 |
| 47 | 10 | 27 | 53 | 123 | 321 | 53 | 127 |
| 48 | 10 | 27 | 66 | 124 | 421 | 66 | 114 |
| 49 | 10 | 27 | 83 | 125 | 521 | 83 | 97 |
| 50 | 10 | 36 | 46 | 131 | 131 | 46 | 134 |

## Figure 18

100-code Tag Manufacturing Information         MCE     26/07/98
**ABSOLUTE ANGLES**                                              Issue #2

| Tag No | Angle #1 | Angle #2 | Angle #3 | Base 6 (Fwd) | Base 6 (Rev) | Length | Big Gap |
|---|---|---|---|---|---|---|---|
| 51 | 10 | 36 | 53 | 132 | 231 | 53 | 127 |
| 52 | 10 | 36 | 62 | 133 | 331 | 62 | 118 |
| 53 | 10 | 36 | 75 | 134 | 431 | 75 | 105 |
| 54 | 10 | 36 | 92 | 135 | 531 | 92 | 88 |
| 55 | 10 | 49 | 59 | 141 | 141 | 59 | 121 |
| 56 | 10 | 49 | 66 | 142 | 241 | 66 | 114 |
| 57 | 10 | 49 | 75 | 143 | 341 | 75 | 105 |
| 58 | 10 | 49 | 88 | 144 | 441 | 88 | 92 |
| 59 | 10 | 66 | 76 | 151 | 151 | 76 | 104 |
| 60 | 10 | 66 | 83 | 152 | 251 | 83 | 97 |
| 61 | 10 | 66 | 92 | 153 | 351 | 92 | 88 |
| 62 | 17 | 21.5 | 38.5 | 202 | 202 | 38.5 | 141.5 |
| 63 | 17 | 21.5 | 47.5 | 203 | 302 | 47.5 | 132.5 |
| 64 | 17 | 21.5 | 60.5 | 204 | 402 | 60.5 | 119.5 |
| 65 | 17 | 21.5 | 77.5 | 205 | 502 | 77.5 | 102.5 |
| 66 | 17 | 27 | 44 | 212 | 212 | 44 | 136 |
| 67 | 17 | 27 | 53 | 213 | 312 | 53 | 127 |
| 68 | 17 | 27 | 66 | 214 | 412 | 66 | 114 |
| 69 | 17 | 27 | 83 | 215 | 512 | 83 | 97 |
| 70 | 17 | 34 | 51 | 222 | 222 | 51 | 129 |
| 71 | 17 | 34 | 60 | 223 | 322 | 60 | 120 |
| 72 | 17 | 34 | 73 | 224 | 422 | 73 | 107 |
| 73 | 17 | 34 | 90 | 225 | 522 | 90 | 90 |
| 74 | 17 | 43 | 60 | 232 | 232 | 60 | 120 |
| 75 | 17 | 43 | 69 | 233 | 332 | 69 | 111 |
| 76 | 17 | 43 | 82 | 234 | 432 | 82 | 98 |
| 77 | 17 | 43 | 99 | 235 | 532 | 99 | 81 |
| 78 | 17 | 56 | 73 | 242 | 242 | 73 | 107 |
| 79 | 17 | 56 | 82 | 243 | 342 | 82 | 98 |
| 80 | 17 | 56 | 95 | 244 | 442 | 95 | 85 |
| 81 | 17 | 73 | 90 | 252 | 252 | 90 | 90 |
| 82 | 17 | 73 | 99 | 253 | 352 | 99 | 81 |
| 83 | 26 | 30.5 | 56.5 | 303 | 303 | 56.5 | 123.5 |
| 84 | 26 | 30.5 | 69.5 | 304 | 403 | 69.5 | 110.5 |
| 85 | 26 | 30.5 | 86.5 | 305 | 503 | 86.5 | 93.5 |
| 86 | 26 | 36 | 62 | 313 | 313 | 62 | 118 |
| 87 | 26 | 36 | 75 | 314 | 413 | 75 | 105 |
| 88 | 26 | 36 | 92 | 315 | 513 | 92 | 88 |
| 89 | 26 | 43 | 69 | 323 | 323 | 69 | 111 |
| 90 | 26 | 43 | 82 | 324 | 423 | 82 | 98 |
| 91 | 26 | 43 | 99 | 325 | 523 | 99 | 81 |
| 92 | 26 | 52 | 78 | 333 | 333 | 78 | 102 |
| 93 | 26 | 52 | 91 | 334 | 433 | 91 | 89 |
| 94 | 26 | 65 | 91 | 343 | 343 | 91 | 89 |
| 95 | 26 | 65 | 104 | 344 | 443 | 104 | 76 |
| 96 | 39 | 43.5 | 82.5 | 404 | 404 | 82.5 | 97.5 |
| 97 | 39 | 43.5 | 99.5 | 405 | 504 | 99.5 | 80.5 |
| 98 | 39 | 49 | 88 | 414 | 414 | 88 | 92 |
| 99 | 39 | 56 | 95 | 424 | 424 | 95 | 85 |
| 100 | 39 | 65 | 104 | 434 | 434 | 104 | 76 |

**Figure 19**

Figure 20

Figure 21

Figure 22

Figure 23

Figure 24

Figure 25

Figure 26

DATA ACQUISITION

Figure 27

CONVERT TO ANGLES

2G values of
POS, range 0-N

G (= no of gaps)

i=0

SUM[i] = POS[i]+POS[i+G]-(N/2)

DIFF[i] = POS[i+G]-POS[i] - (N/2)

| i | SUM | DIFF |
|---|---|---|
| 0 | 34.32 | 3.56 |
| 1 | 59.92 | -2.33 |
| 2 | 94.24 | 1.23 |
| ... | ... | ... |
| G-1 | 624.88 | 2.11 |

DIFF[i]>LIM ?  no

LIM (= max asymmetry)

yes

Set asymmetry flag

i=i+1

i<G ?  yes

no

i=0

GAP[i] = SUM[(i+1)%G]-SUM[i]

GAP[i] = ((GAP[i]+N)%N)/N*180

DEV[i] = DIFF[i]/N*360

| i | GAP | DEV |
|---|---|---|
| 0 | 4.5 | 1.29 |
| 1 | 4.5 | -0.82 |
| 2 | 4.5 | 0.43 |
| ... | | |
| G-1 | 76.19 | 0.74 |

i=i+1

i<G ?  yes

no

GAP angle data

DEV angle data

Figure 28

2-DIGIT DECODE

Figure 29

| Base-6 digit | Min (deg) | Max (deg) |
|---|---|---|
| 0 | 3.38 | 5.69 |
| 1 | 8.35 | 11.75 |
| 2 | 14.67 | 19.46 |
| 3 | 22.79 | 29.39 |
| 4 | 34.52 | 43.72 |
| 5 | 49.86 | 62.46 |

| Index | Value |
|---|---|
| 0 | 0 |
| 1 | 1 |
| 2 | 2 |
| ... | ... |
| 49 | 45 |
| 50 | 46 |
| 51 | 47 |
| ... | ... |
| 215 | -1 |

4-DIGIT DECODE

GAP angle data

7 gaps ? — no → Error

yes

Rotate data: big gap first

Start with second gap

Compare gap against max/min limits for each nominal gap size

| Base-6 digit | Min (deg) | Max (deg) |
|---|---|---|
| 0 | 2.90 | 5.30 |
| 1 | 7.50 | 10.60 |
| 2 | 13.80 | 17.30 |
| 3 | 20.30 | 26.10 |
| 4 | 30.20 | 37.00 |
| 5 | 44.00 | 51.20 |

Any match ? — no → Error

yes

Generate base-6 digit → Record max digit value

Add to right of last digit

Look at the next gap

Finished ?

All digits eq ? — yes →

no

Big gap > Min[max digit + 1] — no → Error

yes

LH 3 digits

Rev RH 3 digits

Lookup LH number

Lookup RH number

| Index | Value |
|---|---|
| 0 | 0 |
| 1 | 1 |
| 2 | 7 |
| ... | ... |
| 49 | 21 |
| 50 | 32 |
| 51 | 54 |
| ... | ... |
| 215 | 215 |

LH    RH

RH > LH ? — yes → Swap LH and RH

no

Lookup RH no (RH<LH)

Offset[RH]

Offset[RH+1]

| Index | Value |
|---|---|
| 0 | -1 |
| 1 | 199 |
| 2 | 389 |
| ... | ... |
| 49 | 7242 |
| 50 | 7338 |
| 51 | 7433 |
| ... | ... |
| 100 | 9998 |

(LH-RH)< (Offset[RH+1]- Offset[RH]) — no → Error

yes

Code = (LH-RH)+Offset[RH]

0000-9999 ? — no → Error

yes → TAG VALUE

Figure 30

Up to 10-DIGIT DECODE

| Base-5 digit | Min (deg) | Max (deg) |
|---|---|---|
| 0 | 2.88 | 4.12 |
| 1 | 4.20 | 5.80 |
| 2 | 5.95 | 8.04 |
| 3 | 8.25 | 10.95 |
| 4 | 10.94 | 14.31 |

Figure 31

Figure 32

Figure 33

Figure 34

READ/WRITE TAG DECODE

Figure 35

140

141

**Figure 36**

146
147
144
149
143
148
145
142

151
152
150

**Figure 37**

Figure 38

**Figure 39**

**Figure 40**

154

Z

Y

X

142

**Figure 41**

156,157,
158,159

144,145,146,
147

164

163

144

167

168

166

169

**Figure 42**

Figure 43

Convolution function

Time (s)

Figure 44

TOP LEVEL 3D READ

Figure 45

3D DATA ACQUISITION

Figure 46

51

GET FIELD DIRECTIONS

```
┌─────────────────┐  ┌─────────────────┐  ┌─────────────────┐
│  INTERP data   /   │    Max PTR     /   │  BX,BY,BZ[index] /
└─────────────────┘  └─────────────────┘  └─────────────────┘
```

```
┌─────────────────────────┐
│          i=0            │
└─────────────────────────┘

┌─────────────────────────┐
│   j=FLOOR(INTERP[i])    │
└─────────────────────────┘

┌─────────────────────────┐
│         k=j+1           │
└─────────────────────────┘

┌─────────────────────────┐
│  B1 = (BX[j],BY[j],BZ[j]) │
└─────────────────────────┘

┌─────────────────────────┐
│  B2 = (BX[k],BY[k],BZ[k]) │
└─────────────────────────┘

┌─────────────────────────┐
│  B[i] = (B1+B2)/|B1+B2|  │
└─────────────────────────┘

┌─────────────────────────┐
│       Increment i       │
└─────────────────────────┘

yes  ◇ i < Max PTR ? ◇

no
```

```
┌─────────────────┐          ┌─────────────────┐
│       B[i]      /          │   peak index    /
└─────────────────┘          └─────────────────┘

┌─────────────────────────┐
│       k=peak index      │
└─────────────────────────┘

┌─────────────────────────┐
│  NORM=(BX[k],BY[k],BZ[k]) │
└─────────────────────────┘
```

```
┌─────────────────┐          ┌─────────────────┐
│      NORM       /          │    Array of B   /
└─────────────────┘          └─────────────────┘
```

Figure 47

COUNT BLIPS

Figure 48

Figure 49

GET FINAL GAPS

Figure 50

Figure 51

Figure 52